# EUROPEAN PATENT SPECIFICATION

(11) **EP 1 983 766 B1**
(45) Date of publication and mention of the grant of the patent: **15.08.2012**
(21) Application number: 07720244.8
(22) Date of filing: 12.02.2007
(51) Int. Cl.: H04Q 3/00

(54) **METHOD FOR REALIZING WAC SERVICE, SYSTEM AND CALLING CONTROLLER AND APPLICATION SERVER THEREOF**
VERFAHREN ZUR REALISIERUNG EINES WAC-DIENSTES, SYSTEM UND CALLING-STEUERUNG UND ANWENDUNGSSERVER DAFÜR
PROCÉDÉ, SYSTÈME ET CONTRÔLEUR APPELANT POUR FOURNITURE DE SERVICE WAC ET SERVEUR D'APPLICATION

(30) Priority: 11.02.2006 CN 200610033593; 22.06.2006 CN 200610090041; 30.09.2006 CN 200610159686
(43) Date of publication of application: 22.10.2008
(73) Proprietor: Huawei Technologies Co., Ltd., Longgang District, Shenzhen Guangdong 518129 (CN)
(72) Inventor: ZHANG, Dewen, Guangdong 518129 (CN); WANG, Peng, Guangdong 518129 (CN); XU, Peili, Guangdong 518129 (CN); CHEN, Hanbing, Guangdong 518129 (CN); WU, Zhaojun, Guangdong 518129 (CN); ZHENG, Xiaofeng, Guangdong 518129 (CN); ZUO, Jun, Guangdong 518129 (CN)
(74) Representative: Hengelhaupt, Jürgen
(86) International application number: PCT/CN2007/000477
(87) International publication number: WO 2007/090356

(56) References cited:
- WO-A-01/76270
- WO-A1-01/13654
- CN-A- 1 567 862
- CN-A- 1 630 253
- US-A- 5 892 821
- US-B1- 6 718 030

## Description

This application claims the priorities of CN Application No. 200610033593.7, CN Application No. 200610090041.X and CN Application No. 200610159686.4 filed on February 11 2006, June 22 2006 and September 30 2006, titled "METHOD FOR -DELIVERING INFORMATION IN A CALL SERVICE", "METHOD FOR IMPLEMENTING WAC SERVICE" and "METHOD AND SYSTEM FOR IMPLEMENTING WAC SERVICE AND CALL CONTROLLER" respectively.

### Field of the Invention

The present invention relates to communication technology, and in particular, to a method and a system for implementing WAC (Wide Area Centrex) service, a call controller and an application server.

### Background of the Invention

With the development of communication technology, a WAC (Wide Area Centrex) service is put forward at present, which may form a WAC subscriber group from subscribers distributed in different controllers (such as softswitches or switches) to implement virtual internal communication.

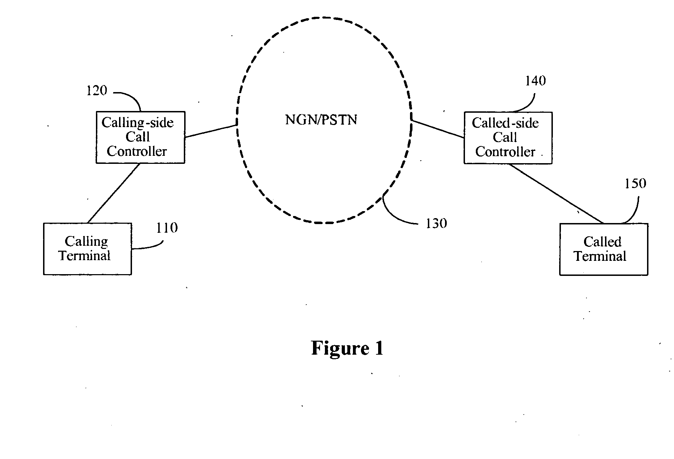

Figure 1 shows a structural representation of a typical system for implementing WAC service in the prior art. As shown in Figure 1, the system for implementing WAC service includes: a calling terminal 110, a calling-side call controller 120, an NGN/PSTN (Next Generation Network/Public Switched Telephone Network) 130, a called-side call controller 140 and a called terminal 150.

The calling-side call controller 120 records the subscriber data and WAC information of the calling terminal, and the called-side call controller 140 records the subscriber data and WAC information of the called terminal. The WAC information includes: WAC group number, WAC group name and subscriber ID in the WAC group. The subscriber ID in the WAC group includes information such as intra-WAC group short number and calling name.

A WAC subscriber generally has two numbers. One of the numbers is a public network number provided by a telecommunication operator, generally referred to as subscriber number, the other is a number used in the WAC group, generally referred to as short number because the number is ordinarily short.

The procedure for implementing WAC service includes the following processes: when two subscribers in a WAC group want to communicate with each other, the calling terminal 110 initiates a call to the calling-side call controller 120; the calling-side call controller 120 sends a call request message, which carries the subscriber number of the calling terminal, to the called-side call controller 140; the called-side call controller 140 initiates a call to the called terminal 150, and sends the subscriber number of the calling terminal to the called terminal 150 during the call; and the called terminal 150 displays the subscriber number of the calling terminal and communicates with the calling terminal 110.

At present, if the calling terminal 110 and the called terminal 150 belong to different call controllers, the communication needs to be implemented via the public NGN/PSTN network 130, but in the NGN/PSTN network 130, interaction can only be implemented using subscriber number. The called-side call controller 140 receives the subscriber number of the calling terminal, so the called terminal 150 can only display the subscriber number of the calling terminal. In other words, when two subscribers inside a WAC subscriber group communicate with each other, the called terminal 150 displays the subscriber number of the calling terminal which is used for communicating with subscribers outside the WAC subscriber group. Therefore, the subscriber experience will be affected, and it is adverse to the popularization of WAC service.

Thus, it can be seen that in the prior art, if two subscriber terminals in a WAC group belong to different call controllers, the called terminal cannot obtain and display the intra-WAC group short number of the calling terminal.

Furthermore, when WAC service is implemented in a PES (PSTN Emulation Subsystem) network, a WAC subscriber group may be formed from subscribers distributed in different AGCFs (Access Gateway Control Function) or different ASs (Application Server), so that virtual internal communication may be implemented. Similar to NGN network, in the prior art, if two subscriber terminals in a WAC group belong to different AGCFs or different ASs, the called terminal cannot obtain and display the intra-WAC group short number of the calling terminal.
WO 01/76270 A discloses a method and a telephone system, for the display of internal subscriber numbers on a telecommunication device.
US 6718030 B 1 discloses a system and method for providing a private telephone network using Voice over Internet Protocol including an addressing scheme that supports two levels of numbers, that is an Internet name and Directory number.
US 5892821 A discloses a method which brings together a combination of special IN features and techniques to allow Centrex station supported by a plurality of central office switching systems, each at different locations, to function from the customer's perspective as though they were served by a single central office switch.
WO 01/13654 A1 discloses a method and a system for signalling used in call setup. In the method, a connection is set up between the first (TE1) and second (TE2) telecommunication terminals by using the number comprised in the private numbering plan. In the invention, the same APP parameter is used in the Centrex exchange.

### Summary of the Invention

Embodiments of the invention provide a method and a system for implementing WAC service, a call controller and an application server respectively, so that the called terminal may obtain the intra-WAC group short number of the calling terminal during the call.

An embodiment of the invention provides a method for implementing WAC service, which includes:

receiving, by a calling-side call controller, a call from a calling terminal(201,301,401,501)

sending, by the calling-side call controller, a call request message carrying an intra-WAC group short number of the calling terminal to a called-side call controller during the course of calling the called-side call controller, wherein the call request message comprises an extended SIP INVITE message or an extended H.323 Setup message; and

sending, by the called-side call controller, the intra-WAC group short number of the calling terminal to a called terminal during the course of calling the called terminal. (203,306,404,507)

An embodiment of the invention provides a system for implementing WAC service, which includes a calling-side call controller and a called-side call controller;

the calling-side call controller is adapted to forward a call from a calling terminal to the called-side call controller and send a call request message carrying an intra-WAC group short number of the calling terminal to the called-side call controller; wherein the call request message comprises an extended SIP INVITE message or an extended H.323 Setup message (202,304,403,505);

the called-side call controller is adapted to switch the call to the called terminal and send the intra-WAC group short number of the calling terminal to a called terminal.

An embodiment of the invention provides a call controller, which includes a call receiving unit, a WAC processing unit and a call sending unit;

the call receiving unit is adapted to receive a call initiated by a calling terminal;

the WAC processing unit performs information communication with the call receiving unit, and is adapted to obtain an intra-WAC group short number of a called terminal and a subscriber number of the calling terminal from the call, retrieve a subscriber number of the called terminal according to the intra-WAC group short number of the called terminal, and retrieve an intra-WAC group short number of the calling terminal according to the subscriber number of the calling terminal; and

the call sending unit performs information communication with the WAC processing unit, and is adapted to send a call request message carrying the intra-WAC group short number of the calling terminal, wherein the call request message comprises an extended SIP INVITE message or an extended H.323 Setup message (202,304,403,505) .

An embodiment of the invention provides an application server, which includes:

a call receiving unit adapted to receive a call from a CSCF (Call Session Control Function);

a WAC processing unit performing information communication with the call receiving unit, and adapted to obtain an intra-WAC group short number of a called terminal and a subscriber ID of a calling terminal from the call, retrieve a subscriber ID of the called terminal according to the intra-WAC group short number of the called terminal, and retrieve an intra-WAC group short number of the calling terminal according to the subscriber ID of the calling terminal; and

an information sending unit performing information communication with the WAC processing unit, and adapted to send a call request message carrying the intra-WAC group short number of the calling terminal and the subscriber ID of the called terminal to the CSCF; wherein the call request message comprises an extended SIP INVITE message or an extended H.323 Setup message (202,304,403,505).

In the method and system for implementing WAC service according to the embodiments of the invention, because the calling-side call controller may send the intra-WAC group short number of the calling terminal to the called-side call controller, and the called-side call controller may send the intra-WAC group short number of the calling terminal to the called terminal, the called terminal may display the intra-WAC group short number of the calling terminal or the subscriber information of the calling terminal, so that the experience of a subscriber on WAC service may be improved.

With the call controller according to the embodiment of the invention, the intra-WAC group short number of the calling terminal may be retrieved and sent, so that the called terminal may display the intra-WAC group short number of the calling terminal by cooperating with other network entities.

With the application server according to the embodiment of the invention, the intra-WAC group short number of the calling terminal may be retrieved and sent, so that the called terminal may display the intra-WAC group short number of the calling terminal by cooperating with other network entities.

### Brief Description of the Drawings

Figure 1 is a structural representation of a typical system for implementing WAC service in the related art;

Figure 2 is a schematic flow chart of the method according to an Embodiment 1 of the invention;

Figure 3 is a schematic flow chart of message interaction in the method according to the Embodiment 1 of the invention;

Figure 4 is a schematic flow chart of the method according to an Embodiment 2 of the invention;

Figure 5 is a schematic flow chart of message interaction in the method according to the Embodiment 2 of the invention;

Figure 6 is a structural representation of the call controller according to an embodiment of the invention;

Figure 7 is a schematic diagram of an embodiment of the WAC processing unit in Figure 6;

Figure 8 is a schematic diagram of another embodiment of the WAC processing unit in Figure 6;

Figure 9 is a schematic diagram of still another embodiment of the WAC processing unit in Figure 6;

Figure 10 is a schematic flow chart of the method according to an Embodiment 3 of the invention;

Figure 11 is a schematic flow chart of the method according to an Embodiment 4 of the invention;

Figure 12 is a schematic flow chart of message interaction the method according to the Embodiment 4 of the invention;

Figure 13 is a structural representation of the application server according to an embodiment of the invention;

Figure 14 is a schematic diagram of an embodiment of the WAC processing unit in Figure 13;

Figure 15 is a schematic diagram of another embodiment of the WAC processing unit in Figure 13; and

Figure 16 is a schematic diagram of still another embodiment of the WAC processing unit in Figure 13.

### Detailed Description of the Embodiments

To make the objects, technical solutions and advantages of the invention more apparent, the invention will now be further described in detail in conjunction with the drawings and the specific embodiments.

In the embodiments of the invention, a call controller may be a switch or a softswitch, a terminal may be an SIP (Session Initiation Protocol) terminal, an MGCP (Media Gateway Control Protocol) terminal, an H.248 terminal and so on, and the interaction between a calling-side call controller and a called-side call controller may comply with SIP protocol or H.323 protocol.

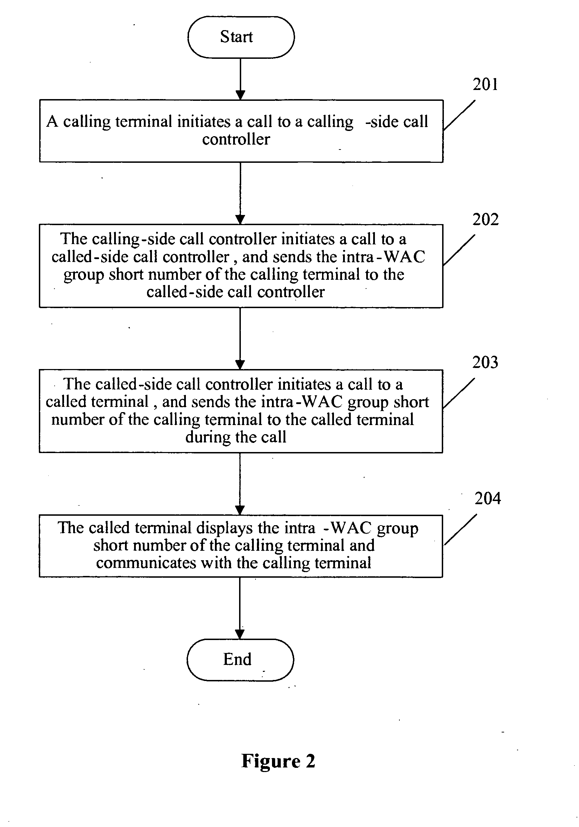

Figure 2 shows a schematic flow chart according to an Embodiment 1 of the invention. As shown in Figure 2, the method for implementing WAC service according to the Embodiment 1 of the invention includes the following blocks:

Block 201: A calling terminal initiates a call to a calling-side call controller.

Block 202: The calling-side call controller initiates a call to a called-side call controller, and sends an intra-WAC group short number of the calling terminal to the called-side call controller during the call.

Block 203: The called-side call controller initiates a call to a called terminal, and sends the intra-WAC group short number of the calling terminal to the called terminal during the call.

Block 204: The called terminal displays the intra-WAC group short number of the calling terminal and communicates with the calling terminal.

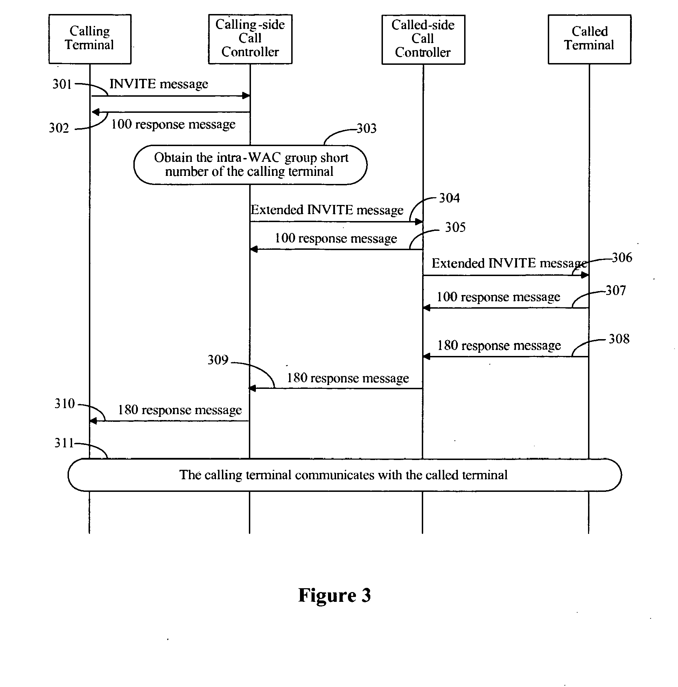

To more clearly illustrate the solution according to the Embodiment 1 of the invention, the method for implementing WAC service according to the Embodiment 1 will be explained in detail hereinafter. As shown in Figure 3, it is a schematic flow chart of message interaction according to the Embodiment 1.

In the Embodiment 1, the calling-side call controller and the called-side call controller are both softswitches, SIP protocol is employed for interaction, and the calling terminal and the called terminal are both SIP terminals.

In the Embodiment 1, a number mapping table, subscriber data and WAC information are saved in the call controller. The association between subscriber numbers and intra-WAC group short numbers of all the terminals under the call controller is recorded in the number mapping table, and subscriber information of the terminals, such as basic information of subscriber ID, subscriber name, duty, age, gender etc., is recorded in the subscriber data. [yt1]

The method for implementing WAC service according to the Embodiment 1 includes:

301: The calling terminal initiates a call to a calling-side call controller and sends an INVITE message, which carries the intra-WAC group short number of a called terminal, to the calling-side call controller during the call.

302: The calling-side call controller returns a 100 response message to the calling terminal.

The calling terminal in the Embodiment 1 is an SIP terminal, which may send the intra-WAC group short number of the called terminal to the calling-side call controller via the INVITE message. But in the other embodiment, if the calling terminal is an MGCP terminal or an H.248 terminal, the calling terminal sends an off-hook message to the calling-side call controller after off-hook, and takes the short number dialed by the subscriber of the calling terminal as the intra-WAC group short number of the called terminal and sends the short number to the calling-side call controller.

303: The calling-side call controller query the number mapping table according to the intra-WAC group short number of the called terminal to obtain the subscriber number of the called terminal corresponding to the intra-WAC group short number of the called terminal. After determining that the called terminal is a subscriber in the WAC group according to the query result, the calling-side call controller retrieves the intra-WAC group short number of the calling terminal from WAC information saved in the calling-side call controller.

In practical application, after receiving a call request message from the calling terminal, the calling-side call controller firstly queries saved subscriber data. Only after the calling-side call controller determines that the calling terminal and the called terminal are not Centrex subscribers under the same call controller according to the subscriber data, the calling-side call controller queries the number mapping table according to the intra-WAC group short number of the called terminal

304: The calling-side call controller initiates a call to the called-side call controller, and sends an extended INVITE message, which carries the intra-WAC group short number of the calling terminal, to the called-side call controller during the call.

305: The called-side call controller returns a 100 response message to the calling-side call controller.

In practical application, the calling-side call controller may still initiate a call to the called-side call controller by using the subscriber number of the calling terminal and the subscriber number of the called terminal and via the NGN/PSTN network.

There may be three ways to extend the INVITE message:

(1) Parameter of header field of the INVITE message is extended and the intra-WAC group short number of the calling terminal is taken as a parameter of a header field. For example, the intra-WAC group short number of the calling terminal is taken as a parameter in the header field From. Below is an example of extension: "group=30; name=xxxx; wac; number=8888" is the extended portion, which provides the information of group number, group name and short number, respectively.
- INVITE sip:7770000@182.20.50.200;user=phone SIP/2.0
- Via: SIP/2.0/UDP 182.20.62.200:5061;branch=z9hG4bK78cdff590
- Call-ID: a47c0b4e9264bf63a191bfa978cdff59@182.20.62.100
- From:xxxxx.com<sip:02077770002@182.20.62.100;user=phone>;tag=78cdff59;group=3 0;name=xxxx;wac;number=8888
- To: xxx.com<sip:7770000@182.20.50.200;user=phone>
- CSeq:1 INVITE
- Contact: <sip:02077770002@18220.62.200:5061;user=phone>
- Supported: 100rel
- Max-Forwards: 70

In the above example, three pieces of information, the group number, the group name and the intra-WAC group short number of the calling terminal, are delivered. Also, only the group number and the intra-WAC group short number of the calling terminal may be extended into the header field From of the INVITE message of SIP protocol, or the group name and the intra-WAC group short number of the calling terminal may be extended into the header field From of the INVITE message of SIP protocol.

(2) Header field of the INVITE message is extended and the intra-WAC group short number of the calling terminal is taken as a new header field. For example, a header field WacInfo is added, for saving the intra-WAC group short number of the calling terminal.

(3) Message body of the INVITE message is extended and the intra-WAC group short number of the calling terminal is taken as a new message body. For example, a message body application/wac is added, for saving the intra-WAC group short number of the calling terminal.

306: The called-side call controller determines that the calling terminal is a subscriber in the WAC group according to the extended INVITE message, extracts the intra-WAC group short number of the calling terminal from the call request message, and sends an extended INVITE message, which carries the intra-WAC group short number of the calling terminal, to the called terminal.

307: The called terminal returns a 100 response message to the called-side call controller.

308: The called terminal displays the intra-WAC group short number of the calling terminal, and returns a 180 response message to the called-side call controller.

309: The called-side call controller returns the 180 response message to the calling-side call controller.

310: The calling-side call controller returns the 180 response message to the calling terminal.

311: The calling terminal communicates with the called terminal.

In practical application, the calling-side call controller may also send another portion or all of the WAC information to the called-side call controller. Thus, the called terminal not only may display the intra-WAC group short number of the calling terminal, but also may display subscriber information of the calling terminal (such as basic information of subscriber ID, subscriber name, duty, age, gender). Naturally, the subscriber may determine which WAC information of the calling terminal is to be sent to the calling terminal. The method for doing so is similar to the Embodiment 1, so the method will not be described again here.

Additionally, in the above Embodiment 1, it is the calling-side call controller that sends the intra-WAC group short number of the calling terminal to the called-side call controller. The called-side call controller may also query the number mapping table according to the subscriber number of the calling terminal to obtain the intra-WAC group short number of the calling terminal and send it to the called terminal. This will not be described in detail here.

In an Embodiment 2 of the invention, centralized management on subscriber numbers and intra-WAC group short numbers of terminals may be implemented via an intelligent storage node, so that more Centrex subscribers may be supported. Specifically, a number mapping table and subscriber data are saved in the intelligent storage node. The association between subscriber numbers and intra-WAC group short numbers of all the terminals controlled by the call controller is recorded in the number mapping table, and subscriber information of the terminals, such as basic information of subscriber ID, subscriber name, duty, age, gender, is recorded in the subscriber data. Below is an example of the data stored in the intelligent storage node.[yt2]

A number mapping table, i.e., a table associating subscriber numbers with intra-WAC group short numbers, is used to retrieve a subscriber number according to an intra-WAC group short number, or retrieve an intra-WAC group short number according to a subscriber number;

Centrex group data, which contains group-related information. Here, the group-related information includes at least group number information and information of terminals in a group;

Subscriber data, which includes subscriber ID or subscriber profile, etc. and is used to retrieve and display subscriber information (such as basic information of subscriber ID, subscriber name, duty, age, gender).

In the Embodiment 2, Centrex group data needs to be configured in the call controller, so that the call controller may determine whether a terminal is a Centrex subscriber, and retrieve the related information from the intelligent storage node. But data of intra-WAC group short number may not be configured in the call controller. Alternatively, the intra-WAC group short number may also be configured in the call controller, and if the short number is configured, the intra-WAC group short number configured in the call controller locally is used.

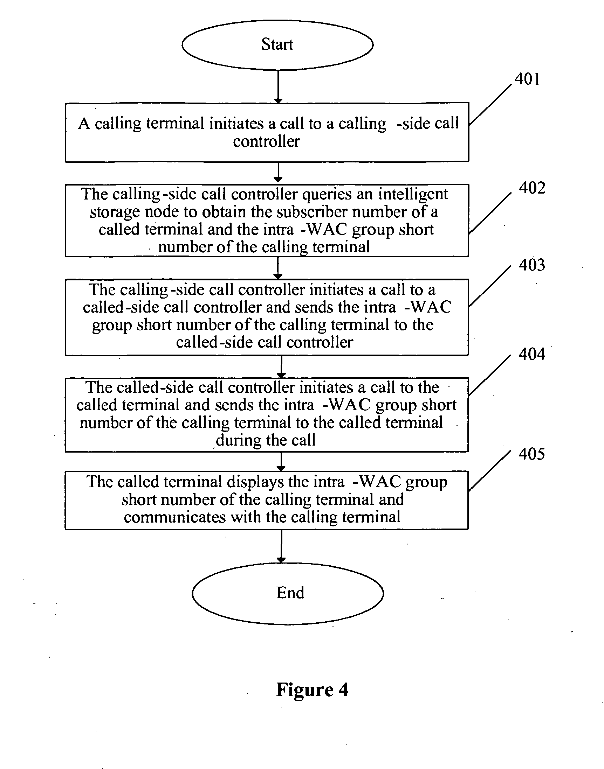

When a Centrex subscriber terminal initiates a call using the intra-WAC group short number of the called terminal, if the subscriber number corresponding to the intra-WAC group short number cannot be retrieved from the calling-side call controller locally, the subscriber number needs to be retrieved from the intelligent storage node, so that the subscriber number of the called terminal may be obtained to locate the called terminal. As shown in Figure 4, it is a schematic flow chart of the Embodiment 2, and the method for implementing WAC service according to the Embodiment 2 includes the following blocks:

Block 401: The calling terminal initiates a call to a calling-side call controller.

Block 402: The calling-side call controller queries the intelligent storage node to obtain the subscriber number of a called terminal and the intra-WAC group short number of the calling terminal.

Block 403: The calling-side call controller initiates a call to a called-side call controller using the subscriber number of the called terminal, and sends the intra-WAC group short number of the calling terminal to the called-side call controller during the call.

Block 404: The called-side call controller initiates a call to the called terminal, and sends the intra-WAC group short number of the calling terminal to the called terminal during the call.

Block 405: The called terminal displays the intra-WAC group short number of the calling terminal and communicates with the calling terminal.

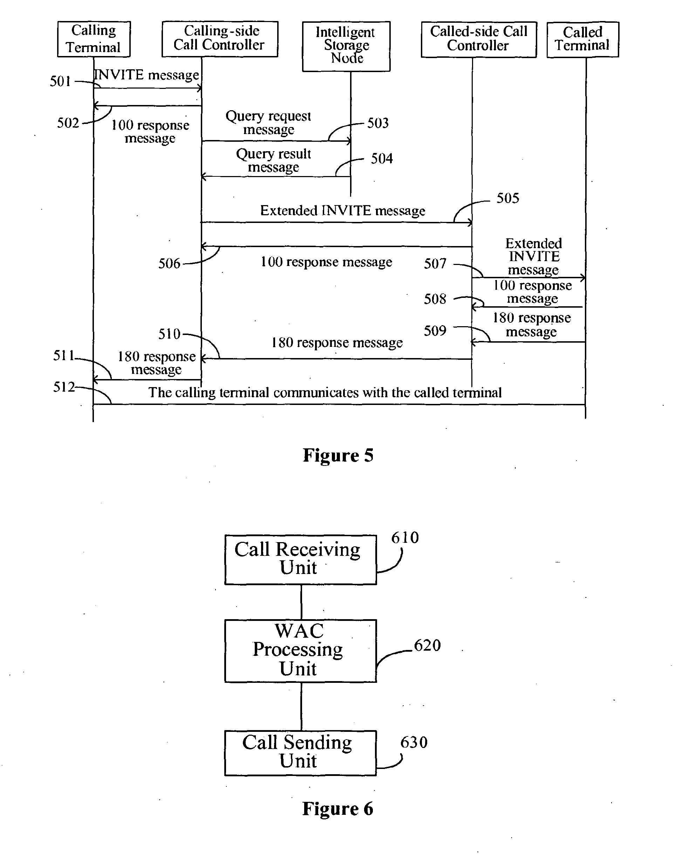

To more clearly illustrate the solution according to the Embodiment 2 of the invention, the method for implementing WAC service according to the Embodiment 2 will be explained in detail hereinafter. As shown in Figure 5, it is a schematic flow chart of message interaction according to the Embodiment 2.

In the Embodiment 2, both the calling-side call controller and the called-side call controller are softswitches, SIP is employed for interaction, and both the calling terminal and the called terminal are SIP terminals.

In the Embodiment 2, the number mapping table and other related subscriber data are saved in the intelligent storage node. The association between subscriber numbers and intra-WAC group short numbers of all the terminals under the call controller is recorded in the table, and basic information of the terminals, such as subscriber ID, is recorded in the subscriber data. The method for implementing WAC service according to the Embodiment 2 includes:

501: A calling terminal initiates a call to a calling-side call controller, and sends an INVITE message, which carries the intra-WAC group short number of a called terminal, to the calling-side call controller during the call.

502: The calling-side call controller returns a 100 response message to the calling terminal.

The calling terminal in the Embodiment 2 is an SIP terminal, which may send the intra-WAC group short number of the called terminal to the calling-side call controller via the INVITE message. But in practical application, if the calling terminal is an MGCP terminal or an H.248 terminal, the calling terminal sends an off-hook message to the calling-side call controller after off-hook, and takes the short number dialed by the subscriber of the calling terminal as the intra-WAC group short number of the called terminal and sends the short number to the calling-side call controller. Because the process in which the calling terminal initiates a call to the calling-side call controller is rather complex and belongs to the prior art, so it will not be described again here.

503: After receiving the INVITE message sent by the calling terminal at 501, the calling-side call controller analyzes and processes the message, and sends a query request message, which carries the subscriber number of the calling terminal and the intra-WAC group short number of the called terminal, to the intelligent storage node, so as to retrieve the number attributes and the related information of the calling and called terminals.

504: The intelligent storage node receives the query request message, and retrieves the intra-WAC group short number of the calling terminal and the subscriber number of the called terminal according to the subscriber number of the calling terminal and the intra-WAC group short number of the called terminal carried in the message. Also, the intelligent storage node may further retrieve the group number information, group name information, subscriber name information etc. of the calling and called terminals. The intelligent storage node sends a query result message carrying the retrieved information to the calling-side call controller.

In practical application, at 503-504, after receiving a call request message from the calling terminal (for example, INVITE message), the calling-side call controller firstly queries the saved subscriber data. Only after determining that the calling terminal and the called terminal are not Centrex subscribers under the same call controller according to the subscriber data, the calling-side call controller queries the number mapping table from the intelligent storage node according to the subscriber number of the calling terminal and the intra-WAC group short number of the called terminal.

505: The calling-side call controller initiates a call to the called-side call controller, and sends an extended INVITE message, which carries the intra-WAC group short number of the calling terminal, to the called-side call controller during the call.

506: The called-side call controller returns a 100 response message to the calling-side call controller.

In practical application, the calling-side call controller may still initiate a call to the called-side call controller by using the subscriber number of the calling terminal and the subscriber number of the called terminal and via the NGN/PSTN network. Because the process for implementing the call is rather complex and belongs to the prior art, so it will not be described again here.

The structure of the SIP message is extended. For example, three optional parameter fields are added to the header field From of the INVITE message, so as to carry the information of the intra-WAC group short number of the calling terminal, the group number and the group name of the calling and called terminals, so that the information may be delivered to the called-side call controller. After receiving the extended SIP message, the called-side call controller obtains the group number of the called terminal, and then compares it with the group number of the calling terminal sent by the calling-side call controller. If the group numbers are the same, this indicates that the call is an intra-group call; otherwise, this indicates that the call is not an intra-group call, and the call will be processed according to a normal process in the prior art. When it is determined that the call is an intra-group call, the short number of the calling terminal will be displayed on the called terminal. There are two ways to determine the group number of the called terminal: retrieving the group number from the intelligent storage node; and retrieving the group number from the called-side call controller.

In practical application, there may be three ways to extend the INVITE message:

(1) Parameter of header field of the INVITE message is extended and the intra-way group short number of the calling terminal is taken as a parameter of a header field. For example, the intra-WAC group short number of the calling terminal is taken as a parameter in the header field From. Below is an example of extension: "group=30; name=xxxx; wac; number=8888" is the extended portion, which provides the information of group number, group name and short number, respectively.
- INVITE sip:7770000@182.20.50.200;user=phone SIP/2.0
- Via: SIP/2.0/UDP 182.20.62.200:5061;branch=z9hG4bK78cdff590
- Call-ID: a47c0b4e9264bf63a191bfa978cdff59@182.20.62.100
- From:xxxxx.com<sip:02077770002@182.20.62.100;user=phone>;tag=78cdff59;group=3 0;name=xxxx;wac;number=8888
- To: xxx.com<sip:7770000@182.20.50.200;user=phone>
- CSeq:1 INVITE
- Contact: <sip:02077770002@182.20.62.200:5061 ;user=phone>
- Supported: 100rel
- Max-Forwards: 70

In the above example, three pieces of information, the group number, the group name and the intra-WAC group short number of the calling terminal, are delivered. Also, only the group number and the intra-WAC group short number of the calling terminal may be extended into the header field From of the INVITE message of SIP protocol, or the group name and the intra-WAC group short number of the calling terminal may be extended into the header field From of the INVITE message of SIP protocol.

(2) Header field of the INVITE message is extended and the intra-WAC group short number of the calling terminal is taken as a new header field. For example, a header field WacInfo is added, for saving the intra-WAC group short number of the calling terminal.

(3) Message body of the INVITE message is extended and the intra-WAC group short number of the calling terminal is taken as a new message body. For example, a message body application/wac is added, for saving the intra-WAC group short number of the calling terminal.

507: The called-side call controller determines that the calling terminal is a subscriber in the WAC group according to the extended INVITE message, extracts the intra-WAC group short number of the calling terminal from the call request message, and sends an extended INVITE message, which carries the intra-WAC group short number of the calling terminal, to the called terminal.

508: The called terminal returns a 100 response message to the called-side call controller.

509: The called terminal displays the intra-WAC group short number of the calling terminal, and returns a 180 response message to the called-side call controller.

510: The called-side call controller returns the 180 response message to the calling-side call controller.

511: The calling-side call controller returns the 180 response message to the calling terminal.

512: The calling terminal communicates with the called terminal.

Additionally, in the above Embodiment 2, it is the calling-side call controller that queries the intelligent storage node to obtain the intra-WAC group short number of the calling terminal and sends it to the called-side call controller. Alternatively, the calling-side call controller may also sends the subscriber number of the calling terminal to the called-side call controller, and the called-side call controller queries a number mapping table in the intelligent storage node according to the subscriber number of the calling terminal to obtain the intra-WAC group short number of the calling terminal and send it to the called terminal. This will not be described in detail here.

In the above two embodiments, the called terminal may also obtain and display the subscriber information of the calling terminal.

In the Embodiment 1, the way of obtaining the subscriber information of the calling terminal by the called terminal includes:

the calling-side call controller queries WAC information saved in advance to obtain the subscriber information of the calling terminal, and sends the subscriber information of the calling terminal to the called-side call controller, and the called-side call controller sends the subscriber information of the calling terminal to the called terminal; or

the calling-side call controller sends WAC service information of the calling-terminal to the called-side call controller, the called-side call controller queries saved WAC information according to the WAC service information of the calling terminal to obtain the subscriber information of the calling terminal, and then sends the subscriber information of the calling terminal to the called terminal.

In the Embodiment 2, the way of obtaining the subscriber information of the calling terminal by the called terminal includes:

Way 1: the calling-side call controller queries WAC information saved in advance, obtains the subscriber information of the calling terminal, and sends the subscriber information of the calling terminal to the called-side call controller, and the called-side call controller sends the subscriber information of the calling terminal to the called terminal; or

Way 2: the calling-side call controller sends WAC service information of the calling terminal to the intelligent storage node, the intelligent storage node retrieves the subscriber information of the calling terminal according to the WAC service information of the calling terminal and sends the subscriber information of the calling terminal to the calling-side call controller, the calling-side call controller sends the subscriber information of the calling terminal to the called-side call controller, and the called-side call controller sends the subscriber information of the calling terminal to the called terminal; or

Way 3: the called-side call controller sends WAC service information of the calling terminal to the intelligent storage node, the intelligent storage node retrieves the subscriber information of the calling terminal according to the WAC service information of the calling terminal and sends it to the called-side call controller; and the called-side call controller sends the subscriber information of the calling terminal to the called terminal; or

Way 4: the called terminal sends WAC service information of the calling terminal to the intelligent storage node, the intelligent storage node retrieves the subscriber information of the calling terminal according to the WAC service information of the calling terminal and sends it to the called terminal.

In the above ways, the WAC service information of the calling terminal may be the subscriber number of the calling terminal, or it may be a combination of the group number or group name of the calling terminal and the intra-WAC group short number of the calling terminal.

Additionally, the interaction between the call controllers in the Embodiment 1 and Embodiment 2 complies with SIP protocol. But in practical application, the interaction between the call controllers may also comply with H.323 protocol. If H.323 protocol is employed, the message in the call process should be changed correspondingly according to H.323 protocol. For example, the INVITE message should be changed into Setup message, the 180 response message may be changed into Alerting message. In this case, the Setup message needs to be extended, and the calling-side call controller may send a Setup message, which carries the intra-WAC group short number of the calling party, to the called-side call controller. Below is a specific example of the extension of the Setup message:

Three pieces of information, the group number, group name and intra-WAC group short number of the calling terminal, are carried by extending the nonStandardData of H323-UU-PDU (H323 User-to-User Packet Data Unit), so that the information may be delivered to the called-side call controller. The below is an example of a portion of the Setup message in which the nonStandardData of the message is extended:
groupname=xxxx; group=20;numberlength=4; number=8888
nonStandardData.nonStandardIdentifier.h22 NonStandard.t35CountryCode = 86
nonStandardData.nonStandardIdentifier.h221NonStandard.t35Extension = 02
nonStandardData.nonStandardIdentifier.h22 1NonStandard.manufacturerCode = 1000

Additionally, in the above specific embodiment, the calling-side call controller and the called-side call controller may be the same controller. In this case, the signaling interaction therebetween will become an internal process.

The invention further provides an embodiment of a system for implementing WAC service, which includes a calling terminal, a called terminal, a calling-side call controller and a called-side call controller.

The calling terminal is adapted to initiate a call to the calling-side call controller.

The calling-side call controller is adapted to forward the call to the called-side call controller and send the intra-WAC group short number of the calling terminal to the called-side call controller.

The called-side call controller is adapted to switch the call to the called terminal and send the intra-WAC group short number of the calling terminal to the called terminal.

The called terminal is adapted to establish a call and communicate with the calling terminal.

Specific ways of implementing WAC service via the present system are as follows:

Way 1: in the present system, a number mapping table may be configured in the calling-side call controller in advance, the association between subscriber numbers and intra-WAC group short numbers of all the terminals under the call controller is recorded in the number mapping table. In this case, the calling-side call controller obtains the intra-WAC group short number of the called terminal and the subscriber number of the calling terminal from the call, and queries the number mapping table using the intra-WAC group short number of the called terminal to obtain the subscriber number of the called terminal, and retrieves the intra-WAC group short number of the calling terminal using the subscriber number of the calling terminal.

Way 2: The present system may include an intelligent storage node, for storing a number mapping table. In this case, the calling-side call controller obtains the intra-WAC group short number of the called terminal from the call, and requests the subscriber number of the called terminal corresponding to the intra-WAC group short number of the called terminal from the intelligent storage node using the intra-WAC group short number of the called terminal, and the intelligent storage node returns the subscriber number of the called terminal to the calling-side call controller. Additionally, the calling-side call controller may also retrieve the intra-WAC group short number of the calling terminal from the intelligent storage node using the subscriber number of the calling terminal, or the calling-side call controller obtains the intra-WAC group short number of the calling terminal from the WAC information saved in advance.

The invention further provides an embodiment of a call controller. As shown in Figure 6, the call controller includes a call receiving unit 610, a WAC processing unit 620 and a call sending unit 630.

The call receiving unit 610 is adapted to receive a call initiated by a calling terminal.

The WAC processing unit 620 performs information communication with the call receiving unit 610, and is adapted to obtain the intra-WAC group short number of a called terminal and the subscriber number of the calling terminal from the call, retrieve the subscriber number of the called terminal using the intra-WAC group short number of the called terminal, and retrieve the intra-WAC group short number of the calling terminal using the subscriber number of the calling terminal.

The call sending unit 630 performs information communication with the WAC processing unit 620, and is adapted to send a call carrying the intra-WAC group short number of the calling terminal. The called party of the call corresponds to the subscriber number of the called terminal.

The WAC processing unit in the call controller may be implemented in various ways.

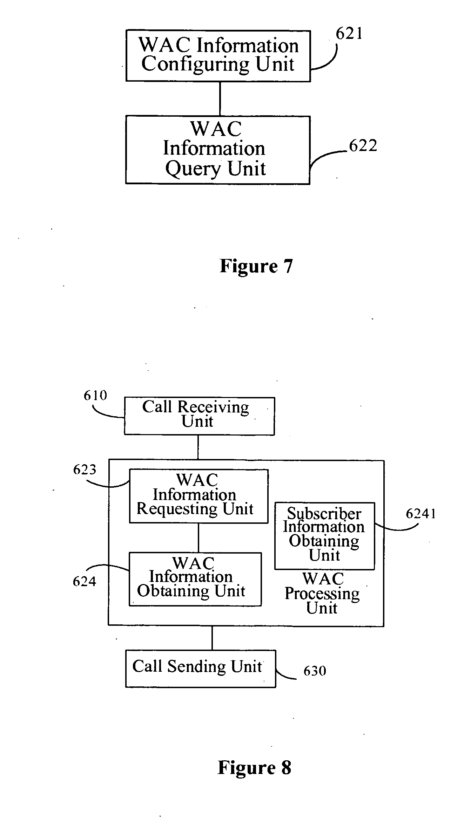

Referring to Figure 7, in a specific implementation, the WAC processing unit 620 may include a WAC information configuring unit 621 and a WAC information query unit 622.

The WAC information configuring unit 621 is adapted to configure a number mapping table and WAC information.

The WAC information query unit 622 performs information communication with the WAC information configuring unit 621, and is adapted to query the number mapping table according to the intra-WAC group short number of the called terminal to obtain the subscriber number of the called terminal, and retrieve the intra-WAC group short number of the calling terminal according to the subscriber number of the calling terminal.

Additionally, the WAC processing unit 620 may further include a subscriber information query unit (not shown) adapted to retrieve the subscriber information of the calling terminal according to the WAC information configured in the WAC information configuring unit 621. Alternatively, the WAC information query unit 622 may retrieve another portion or all of the subscriber information of the calling terminal while retrieving the intra-WAC group short number of the calling terminal.

Referring to Figure 8, in another specific implementation, the WAC processing unit 620 may include a WAC information requesting unit 623 and a WAC information obtaining unit 624.

The WAC information requesting unit 623 is adapted to request the subscriber number of the called terminal corresponding to the intra-WAC group short number of the called terminal and the intra-WAC group short number of the calling terminal corresponding to the subscriber number of the calling terminal from an intelligent storage node.

The WAC information obtaining unit 624 is adapted to obtain the subscriber number of the called terminal corresponding to the intra-WAC group short number of the called terminal and the intra-WAC group short number of the calling terminal corresponding to the subscriber number of the calling terminal from a query result message returned by the intelligent storage node.

Additionally, the WAC processing unit 620 may further include a subscriber information query unit 6241 adapted to obtain the subscriber information corresponding to the WAC service information of the calling terminal from the intelligent storage node or from the WAC information saved in the calling-side call controller locally.

The WAC service information of the calling terminal may be the subscriber number of the calling terminal, or may be a combination of the group number or group name of the calling terminal and the intra-WAC group short number of the calling terminal.

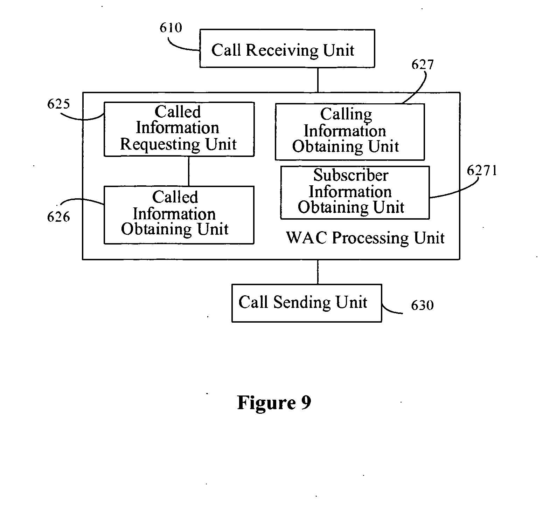

Referring to Figure 9, in another specific implementation, the WAC processing unit 620 may include a called information requesting unit 625, a called information obtaining unit 626 and a calling information obtaining unit 627.

The called information requesting unit 625 is adapted to request the subscriber number of the called terminal corresponding to the intra-WAC group short number of the called terminal from an intelligent storage node.

The called information obtaining unit 626 is adapted to obtain the subscriber number of the called terminal corresponding to the intra-WAC group short number of the called terminal from a query result message returned by the intelligent storage node.

The calling information obtaining unit 627 is adapted to obtain the intra-WAC group short number of the calling terminal corresponding to the subscriber number of the calling terminal from the WAC information saved in the calling-side call controller locally.

Additionally, the WAC processing unit 620 may further include a subscriber information query unit 6271 adapted to obtain the subscriber information corresponding to the WAC service information of the calling terminal from the WAC information saved by the calling-side call controller locally or from the intelligent storage node.

The WAC service information of the calling terminal may be the subscriber number of the calling terminal, or may be a combination of the group number or group name of the calling terminal and the intra-WAC group short number of the calling terminal.

When WAC service is implemented in a PES network, number attributes and the related information of the calling and called terminals may be retrieved by an application server.

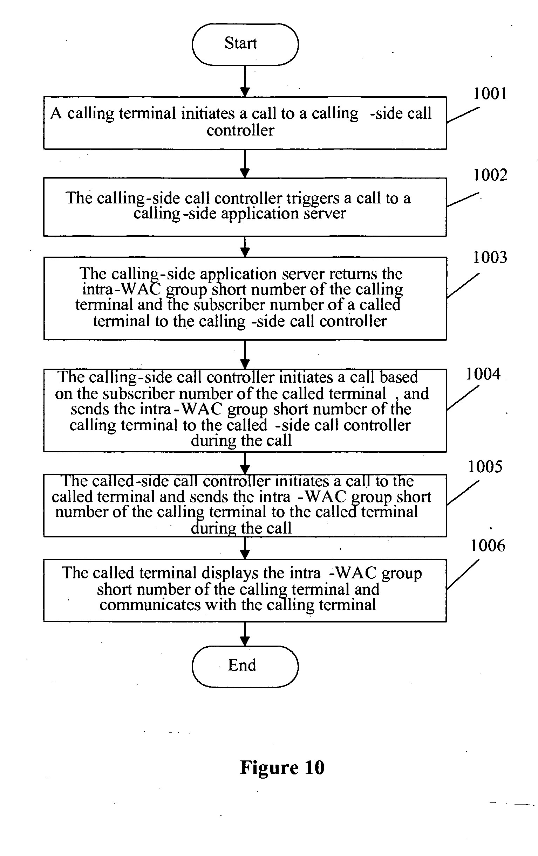

Figure 10 shows a schematic flow chart of the method according to an Embodiment 3 of the invention. As shown in Figure 10, the method for implementing WAC service according to the Embodiment 3 of the invention includes the following blocks:

Block 1001: A calling terminal initiates a call to a calling-side call controller.

Block 1002: The calling-side call controller triggers a call to a calling-side application server.

Block 1003: The calling-side application server returns the intra-WAC group short number of the calling terminal and the subscriber ID of a called terminal to the calling-side call controller.

Specifically, the calling-side application server retrieves the subscriber ID of the called terminal corresponding to the intra-WAC group short number of the called terminal according to the intra-WAC group short number of the called terminal and a preset number mapping table. When determining according to the retrieval result that the called terminal is a subscriber in the WAC group, the calling-side application server obtains the intra-WAC group short number of the calling terminal from the WAC information saved in advance, and the calling-side application server returns the intra-WAC group short number of the calling terminal and the subscriber ID of the called terminal to the calling-side call controller.

Block 1004: The calling-side call controller initiates a call based on the subscriber ID of the called terminal, and sends the intra-WAC group short number of the calling terminal to a called-side call controller during the call.

Block 1005: The called-side call controller initiates a call to the called terminal and sends the intra-WAC group short number of the calling terminal to the called terminal during the call.

Block 1006: The called terminal displays the intra-WAC group short number of the calling terminal and communicates with the calling terminal.

In the embodiment, the terminal may be a subscriber terminal of any type, such as SIP, H.248, MGCP, ISDN and H.323. The difference between different subscriber terminals is shielded by a network element AGCF. The application server performs query regardless of the type of the subscriber terminal. The call controller may be an S-CSCF (Serving CSCF) etc.

In order to return the intra-WAC group short number of the calling terminal and the subscriber ID of the called terminal to the calling-side call controller, the calling-side application server needs to perform the related query operation according to the call. In a specific implementation, a number mapping table, subscriber data and WAC information may be saved in the application server. In this case, the calling-side application server and the called-side application server need to keep data synchronization. The specific way of data storage and query is similar to the Embodiment 1 and Embodiment 2, so it will not be described in detail here.

It should be noted that in the above Embodiment 3, the calling-side application server sends the intra-WAC group short number of the calling terminal to the calling-side S-CSCF, and the calling-side S-CSCF sends it to called party. Alternatively, the called-side application server may also query a number mapping table according to the subscriber ID of the calling terminal to obtain the intra-WAC group short number of the calling terminal, and send the intra-WAC group short number of the calling terminal to the called terminal via the called-side 1-CSCF, the called-side S-CSCF and the called-side ACGF. This will not be described in detail here.

In the method according to an Embodiment 4 of the invention, an intelligent storage node is introduced into the network, and centralized management on subscriber IDs and intra-WAC group short numbers of terminals are implemented by using the intelligent storage node, so that more Centrex subscribers may be supported. The specific storage way and data access way of the application server are similar to the Embodiment 1 and Embodiment 2, so they will not be described in detail here.

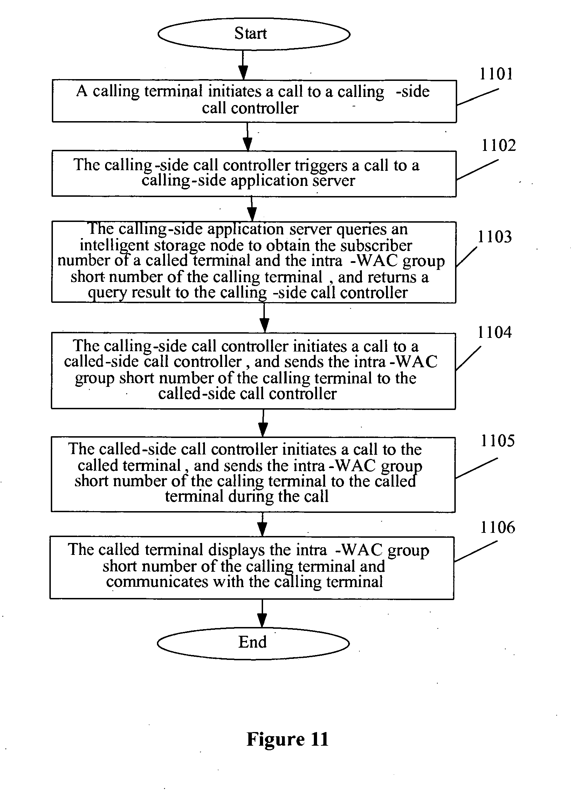

As shown in Figure 11, it is a schematic flow chart of the method according to the Embodiment 4 of the invention. The method for implementing WAC service according to the Embodiment 4 includes the following blocks:

Block 1101 : A calling terminal initiates a call to a calling-side call controller.

Block 1102: The calling-side call controller triggers a call to a calling-side application server.

Block 1103: The calling-side application server retrieves the subscriber ID of a called terminal and the intra-WAC group short number of the calling terminal from an intelligent storage node, and returns the retrieval result to the calling-side call controller.

Block 1103: The calling-side call controller initiates a call to a called-side call controller using the subscriber ID of the called terminal, and sends the intra-WAC group short number of the calling terminal to the called-side call controller during the call.

Block 1104: The called-side call controller initiates a call to the called terminal, and sends the intra-WAC group short number of the calling terminal to the called terminal during the call.

Block 1105: The called terminal displays the intra-WAC group short number of the calling terminal and communicates with the calling terminal.

In the method, the terminal may be a subscriber terminal of any type, such as SIP, H.248, MGCP, ISDN and H.323. The difference between different subscriber terminals is shielded by a network element AGCF. The application server performs query regardless of the type of the subscriber terminal. The call controller may be an S-CSCF (Serving CSCF) etc.

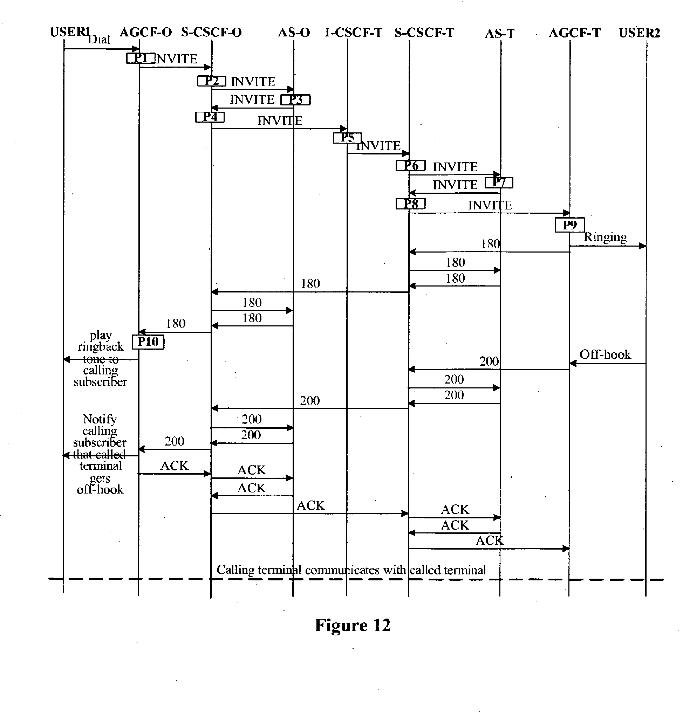

To more clearly illustrate the solution according to the Embodiment 4 of the invention, the method for implementing WAC service according to the Embodiment 4 will be explained in detail hereinafter. As shown in Figure 12, it is a schematic flow chart of message interaction according to the Embodiment 4 of the invention.

P1: After a calling terminal (USER1) gets off-hook and dials a number, a calling-side AGCF (AGCF-O) constructs an INVITE message and sends the message to a calling-side S-CSCF (S-CSCF-O). The INVITE message carries the intra-WAC group short number of a called terminal.

P2: The S-CSCF-O receives a call from the AGCF-O, and performs the corresponding processing.

Firstly, the S-CSCF-O determines that this is a calling-side call process. Then, the S-CSCF-O determines the calling subscriber that initiates the call, finds a trigger rule in the subscriber data of the subscriber, triggers a calling-side AS (AS-O) according to the trigger rule and sends an INVITE message to the AS.

P3: After determining that this is a calling-side call process, the AS-O determines whether the calling party subscribes for WAC service. If yes, the AS-O performs the following process.

The AS-O sends a query request message, which carries the subscriber ID of the calling terminal and the intra-WAC group short number of a called terminal, to an intelligent storage node (not shown), so as to retrieve number attributes and the related information of the calling and called terminals;

The intelligent storage node receives the query request message, and retrieves the intra-WAC group short number of the calling terminal and the subscriber ID of the called terminal according to the subscriber ID of the calling terminal and the intra-WAC group short number of the called terminal carried in the message. Additionally, the group number information, group name information, subscriber name information etc. of the calling and called terminals may be further retrieved. The intelligent storage node sends a query result message carrying the retrieved information to the AS-O.

The AS-O sends an extended INVITE message, which carries the intra-WAC group short number of the calling terminal, to the S-CSCF-O.

In practical application, there may be three ways to extend the INVITE message, which are similar to the Embodiment 1 and Embodiment 2 of the method according to the invention.

When the way of extending parameter of header field of the INVITE message and taking the intra-WAC group short number of the calling terminal as a parameter of a header field is employed, a parameter of the header field P-Asserted-Identity may be extended. Below is an example of extension: "group=30; name=xxxx; wac; number=8888" is the extended portion, which provides information of group number, group name and short number, respectively.
P-Asserted-Identity: <sip:+3696395124@ims.t-mobile.hu>,<tel:+3696395124>; group=30; name=xxxx; wac; number=8888

In the above example, three pieces of information, the group number, group name and intra-WAC group short number of the calling terminal, are delivered. Alternatively, only the group number and intra-WAC group short number of the calling terminal may be extended into the header field P-Asserted-Identity of the INVITE message of SIP protocol, or the group name and intra-WAC group short number of the calling terminal may be extended into the header field P-Asserted-Identity of the INVITE message of SIP protocol.

P4: The S-CSCF-O receives the extended INVITE message from the AS-O, and routes the call to the home domain of the called terminal.

Specifically, the S-CSCF-O sends the INVITE message, which carries the intra-WAC group short number of the calling terminal, to a called-side I-CSCF (I-CSCF-T). The request line RequestURI of the INVITE message is the SIP URI of the called terminal.

P5: The I-CSCF-T receives the INVITE message, retrieves an S-CSCF-T registered by the called terminal according to the Request-URI, and forwards the INVITE message to the S-CSGF-T.

P6: The S-CSCF-T receives the INVITE message, extracts the public ID of the called subscriber from the Request-URI, finds a trigger rule of the called subscriber according to the public ID of the called subscriber, and then triggers the called-side AS (AS-T).

P7: The AS-T receives the INVITE message and determines that this is a called-side call process, and performs the corresponding processing according to WAC service:

The AS-T determines that the calling terminal is a subscriber in the WAC group according to the extended INVITE message, extracts the intra-WAC group short number of the calling terminal from the message, and sends an extended INVITE message, which carries the intra-WAC group short number of the calling terminal, to the S-CSCF-T.

P8: The S-CSCF-T receives the INVITE message from the AS-T, and sends the call to the called-side AGCF (AGCF-T).

P9: The AGCF-T receives the INVITE message from the S-CSCF-T and locates the called terminal (USER2) according to the public ID of the called subscriber, and notifies the USER2 to ring. The called terminal displays the intra-WAC group short number of the calling terminal.

Subsequently, the called terminal returns a 180 ring message, and the 180 message is transferred to the AGCF-O sequentially via the network.

P10: The AGCF-O receives the 180 message, and notifies the calling terminal to play a ringback tone or notifies an MG (Media Gataway) to play a ringback tone to the calling terminal (it is also possible for the called terminal to play a ringback tone to the calling terminal via the 180 message).

Subsequently, the interaction of 200 message and ACK message may be performed as in the prior art, so that the communication between the calling and called terminals may be implemented. This will not be described in detail here.

Additionally, in the above Embodiment 4, the calling-side application server retrieves the intra-WAC group short number of the calling terminal from the intelligent storage node and sends it to the called party via the calling-side S-CSCF. Alternatively, the calling-side S-CSCF may send the subscriber ID of the calling terminal to the called party, and the called-side application server queries the number mapping table from the intelligent storage node according to the subscriber ID of the calling terminal, obtains the intra-WAC group short number of the calling terminal and sends it to the called terminal via the called-side I-CSCF, the called-side S-CSCF and the called-side ACGF. This will not be described in detail here.

Additionally, the calling-side application server may send a query request message, which carries the intra-WAC group short number of the called terminal, to the intelligent storage node. The intelligent storage node retrieves the subscriber ID of the called terminal according to the intra-WAC group short number of the called terminal carried in the query request message, and sends a query result message carrying the retrieved information to the calling-side application server. The calling-side application server obtains the intra-WAC group short number of the calling terminal from the WAC information saved in advance, and the calling-side application server returns the intra-WAC group short number of the calling terminal and the subscriber ID of the called terminal to the calling-side call controller.

In the above two embodiments, the called terminal may also obtain and display the subscriber information of the calling terminal.

In the Embodiment 3, the way of obtaining the subscriber information of the calling terminal by the called terminal includes:

the calling-side application server queries the WAC information saved in advance to obtain the subscriber information of the calling terminal, and sends the subscriber information of the calling terminal to the calling-side S-CSCF, and the calling-side S-CSCF sends it to a called party; or

the calling-side application server sends the WAC service information of the calling terminal to the calling-side S-CSCF, and the calling-side S-CSCF sends it to the called party; the called-side application server queries the saved WAC information according to the WAC service information of the calling terminal to obtain the subscriber information of the calling terminal, and sends the subscriber information of the calling terminal to the called terminal via the called-side I-CSCF, the called-side S-CSCF and the called-side ACGF.

In the Embodiment 4, the way of obtaining the subscriber information of the calling terminal by the called terminal includes:

Way 1: The calling-side application server queries the WAC information saved in advance to obtain the subscriber information of the calling terminal, and sends the subscriber information of the calling terminal to the calling-side S-CSCF, and the calling-side S-CSCF sends it to the called party; or

Way 2: The calling-side application server sends the WAC service information of the calling terminal to an intelligent storage node; the intelligent storage node retrieves the subscriber information of the calling terminal according to the WAC service information of the calling terminal, and sends the subscriber information of the calling terminal to the calling-side application server; the calling-side application server sends the subscriber information of the calling terminal to the calling-side S-CSCF, and the calling-side S-CSCF sends it to the called party; or

Way 3: The called-side application server sends the WAC service information of the calling terminal to an intelligent storage node; the intelligent storage node retrieves the subscriber information of the calling terminal according to the WAC service information of the calling terminal and sends it to the called-side application server; and the called-side application server sends the subscriber information of the calling terminal to the called terminal via the called-side I-CSCF, the called-side S-CSCF and the called-side ACGF; or

Way 4: The called terminal sends the WAC service information of the calling terminal to an intelligent storage node; the intelligent storage node retrieves the subscriber information of the calling terminal according to the WAC service information of the calling terminal and sends it to the called terminal.

In the above ways, the WAC service information of the calling terminal may be the subscriber ID of the calling terminal, or may be a combination of the group number or group name of the calling terminal and the intra-WAC group short number of the calling terminal.

Additionally, it should be noted that in the Embodiment 1 and Embodiment 2, the processes in which the call controller retrieves the intra-WAC group short number of the calling terminal and the subscriber number of the called terminal may be carried out simultaneously, or they may be carried out independently.

In the Embodiment 3 and Embodiment 4, the processes in which the application server retrieves the intra-WAC group short number of the calling terminal and the subscriber ID of the called terminal may be carried out simultaneously, or they may be carried out independently.

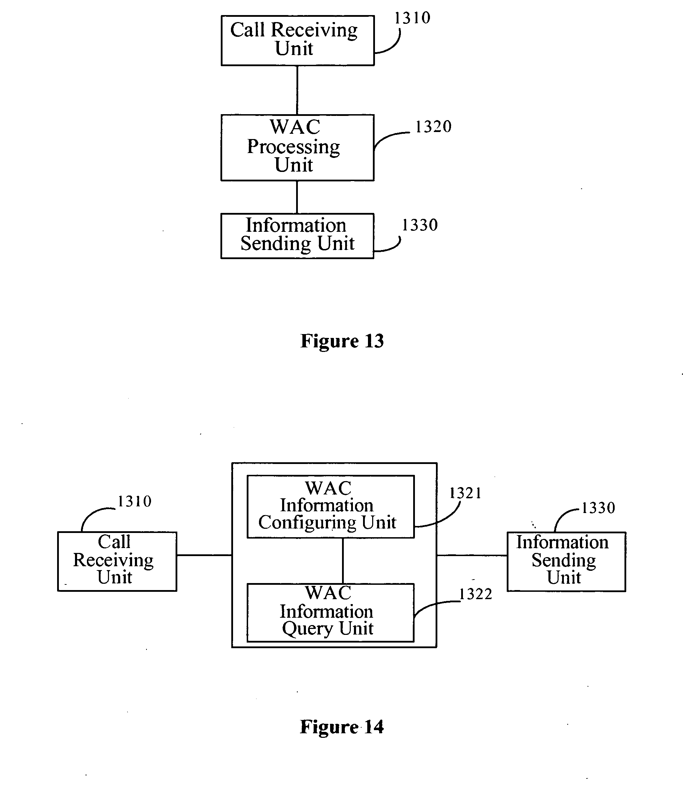

The invention further provides an embodiment of an application server. As shown in Figure 13, the application server includes a call receiving unit 1310, a WAC processing unit 1320 and an information sending unit 1330.

The call receiving unit 1310 is adapted to receive a call from a Call Session Control Function, CSCF.

The WAC processing unit 1320 exchanges information with the call receiving unit 1310, and is adapted to obtain the intra-WAC group short number of the called terminal and the subscriber ID of the calling terminal from the call, retrieve the subscriber ID of the called terminal using the intra-WAC group short number of the called terminal, and retrieve the intra-WAC group short number of the calling terminal using the subscriber ID of the calling terminal.

The information sending unit 1330 exchanges information with the WAC processing unit 1320, and is adapted to send the intra-WAC group short number of the calling terminal and the subscriber ID of the called terminal to the CSCF.

The WAC processing unit in the application server may be implemented in various forms.

Referring to Figure 14, in a specific implementation, the WAC processing unit 1320 may include a WAC information configuring unit 1321 and a WAC information query unit 1322.

The WAC information configuring unit 1321 is adapted to configure a number mapping table and WAC information.

The WAC information query unit 1322 exchanges information with the WAC information configuring unit 1321, and is adapted to query the number mapping table according to the intra-WAC group short number of the called terminal to obtain the subscriber ID of the called terminal, and retrieve the intra-WAC group short number of the calling terminal according to the subscriber ID of the calling terminal.

Additionally, the WAC processing unit 1320 may further include a subscriber information query unit (not shown) adapted to retrieve the subscriber information of the calling terminal according to the WAC information configured by the WAC information configuring unit 1321. Alternatively, the WAC information query unit 1322 may retrieve another portion or all of the subscriber information of the calling terminal while retrieving the intra-WAC group short number of the calling terminal.

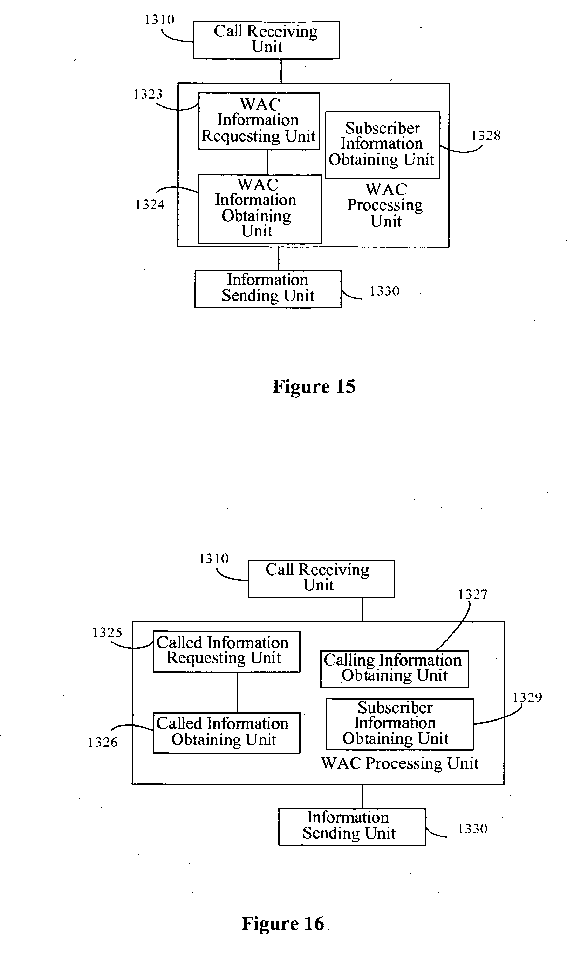

Referring to Figure 15, in another specific implementation, the WAC processing unit 1320 may include a WAC information requesting unit 1323 and a WAC information obtaining unit 1324.

The WAC information requesting unit 1323 is adapted to request the subscriber ID of the called terminal corresponding to the intra-WAC group short number of the called terminal and the intra-WAC group short number of the calling terminal corresponding to the subscriber ID of the calling terminal from the intelligent storage node.

The WAC information obtaining unit 1324 is adapted to obtain the subscriber ID of the called terminal corresponding to the intra-WAC group short number of the called terminal and the intra-WAC group short number of the calling terminal corresponding to the subscriber ID of the calling terminal from a query result message returned by the intelligent storage node.

Additionally, the WAC processing unit 1320 may further include a subscriber information query unit 1328 adapted to obtain the subscriber information corresponding to the WAC service information of the calling terminal from the intelligent storage node or from the WAC information saved by the application server locally.

The WAC service information of the calling terminal may be the subscriber ID of the calling terminal, or may be a combination of the group number or group name of the calling terminal and the intra-WAC group short number of the calling terminal.

Referring to Figure 16, in another specific implementation, the WAC processing unit 1320 may include a called information requesting unit 1325, a called information obtaining unit 1326 and a calling information obtaining unit 1327.

The called information requesting unit 1325 is adapted to request the subscriber ID of the called terminal corresponding to the intra-WAC group short number of the called terminal from the intelligent storage node.

The called information obtaining unit 1326 is adapted to obtain the subscriber ID of the called terminal corresponding to the intra-WAC group short number of the called terminal from a query result message returned by the intelligent storage node.

The calling information obtaining unit 1327 is adapted to obtain the intra-WAC group short number of the calling terminal corresponding to the subscriber ID of the calling terminal from the WAC information saved by the application server locally.

Additionally, the WAC processing unit 1320 may further include a subscriber information query unit 1329 adapted to obtain the subscriber information corresponding to the WAC service information of the calling terminal from the WAC information saved by the application server locally or from the intelligent storage node.

The WAC service information of the calling terminal may be the subscriber ID of the calling terminal, or may be a combination of the group number or group name of the calling terminal and the intra-WAC group short number of the calling terminal.

## Claims

1. A method for implementing Wide Area Centrex, hereafter referred to as WAC service, comprising:
receiving, by a calling-side call controller, a call from a calling terminal(201,301,401,501);
sending, by the calling-side call controller, a call request message carrying an intra-WAC group short number of the calling terminal to a called-side call controller during the course of calling the called-side call controller, wherein the call request message comprises an extended SIP INVITE message or an extended H.323 Setup message, and wherein the intra-WAC group short number of the calling terminal is sent to a called terminal during the course of calling the called terminal by the called-side call controller(203,306,404,507).

2. The method according to claim 1, wherein, when the calling-side call controller receives a call from the calling terminal, the calling-side call controller receives an intra-WAC group short number of the called terminal from the calling terminal.

3. The method according to claim 2, further comprising the following processes between the process of the calling-side call controller receives an intra-WAC group short number of the called terminal from the calling terminal and the process of the calling-side call controller send an intra-WAC group short number of the calling terminal to the called-side call controller:
retrieving, by the calling-side call controller, a subscriber number of the called terminal according to the intra-WAC group short number of the called terminal and a number mapping table associating subscriber numbers with intra-WAC group short numbers; obtaining the intra-WAC group short number of the calling terminal from WAC information saved in advance, when determining according to the retrieval result that the called terminal is a subscriber in a WAC group.

4. The method according to claim 2, further comprising the following processes between the process of the calling-side call controller receives an intra-WAC group short number of the called terminal from the calling terminal and the process of the calling-side call controller send an intra-WAC group short number of the calling terminal to the called-side call controller:
sending, by the calling-side call controller, a query request message to an intelligent storage node according to a subscriber number of the calling terminal and the intra-WAC group short number of the called terminal; and
retrieving, by the intelligent storage node, a subscriber number of the called terminal corresponding to the intra-WAC group short number of the called terminal and the intra-WAC group short number of the calling terminal corresponding to the subscriber number of the calling terminal, and sending a query result message carrying the subscriber number of the called terminal and the intra-WAC group short number of the calling terminal, to the calling-side call controller.

5. The method according to claim 2, further comprising the following processes between the process of the calling-side call controller receives an intra-WAC group short number of the called terminal from the calling terminal and the process of the calling-side call controller send an intra-WAC group short number of the calling terminal to the called-side call controller:
sending, by the calling-side call controller, a query request message to an intelligent storage node according to the intra-WAC group short number of the called terminal;
retrieving, by the intelligent storage node, a subscriber number of the called terminal ; and sending a query result message carrying the subscriber number of the called terminal to the calling-side call controller, when determining according to the retrieval result that the called terminal is a subscriber in a WAC group; and
obtaining, by the calling-side call controller, the intra-WAC group short number of the calling terminal from WAC information saved in advance.

6. The method according to claim 2, further comprising the following processes between the process of the calling-side call controller receives an intra-WAC group short number of the called terminal from the calling terminal and the process of the calling-side call controller send an intra-WAC group short number of the calling terminal to the called-side call controller:
triggering, by the calling-side call controller, a call to a calling-side application server;
retrieving, by the calling-side application server, a subscriber ID of the called terminal according to the intra-WAC group short number of the called terminal and a number mapping table associating subscriber numbers with intra-WAC group short numbers, and obtaining the intra-WAC group short number of the calling terminal from WAC information saved in advance, when determining according to the retrieval result that the called terminal is a subscriber in a WAC group; and
returning, by the calling-side application server, the intra-WAC group short number of the calling terminal and the subscriber ID of the called terminal to the calling-side call controller.

7. The method according to claim 2, further comprising the following processes between the process of the calling-side call controller receives an intra-WAC group short number of the called terminal from the calling terminal and the process of the calling-side call controller send an intra-WAC group short number of the calling terminal to the called-side call controller:
triggering, by the calling-side call controller, a call to the calling-side application server;
sending, by the calling-side application server, a query request message carrying a subscriber ID of the calling terminal and the intra-WAC group short number of the called terminal to an intelligent storage node;
retrieving, by the intelligent storage node, the intra-WAC group short number of the calling terminal and a subscriber ID of the called terminal according to the subscriber ID of the calling terminal and the intra-WAC group short number of the called terminal carried in the query request message, and sending a query result message carrying the retrieved information to the calling-side application server; and
returning, by the calling-side application server, the intra-WAC group short number of the calling terminal and the subscriber ID of the called terminal to the calling-side call controller.

8. The method according to claim 2, further comprising the following processes between the process of the calling-side call controller receives an intra-WAC group short number of the called terminal from the calling terminal and the process of the calling-side call controller send an intra-WAC group short number of the calling terminal to the called-side call controller:
triggering, by the calling-side call controller, a call to the calling-side application server;
sending, by the calling-side application server, a query request message carrying the intra-WAC group short number of the called terminal to an intelligent storage node;
retrieving, by the intelligent storage node, a subscriber ID of the called terminal according to the intra-WAC group short number of the called terminal carried in the query request message, and sending a query result message carrying the retrieved information to the calling-side application server;
obtaining, by the calling-side application server, the intra-WAC group short number of the calling terminal from WAC information saved in advance; and
returning, by the calling-side application server, the intra-WAC group short number of the calling terminal and the subscriber ID of the called terminal to the calling-side call controller.

9. The method according to claim 1, wherein the extended INVITE message is an INVITE message which takes the intra-WAC group short number of the calling terminal as a parameter of a header field; or
the extended INVITE message is an INVITE message which takes the intra-WAC group short number of the calling terminal as a header field; or
the extended INVITE message is an INVITE message which takes the intra-WAC group short number of the calling terminal as a message body.

10. The method according to claim 1, wherein the extended Setup message is a Setup message which carries the intra-WAC group short number of the calling terminal in a subscriber information unit H323-UU-PDU of the message.

11. The method according to claim 1, further comprising: displaying, by the called terminal, the intra-WAC group short number of the calling terminal.

12. The method according to claim 1, further comprising: obtaining, by the called terminal, subscriber information of the calling terminal, and displaying the subscriber information.

13. An apparatus for communication, comprising a call receiving unit, a Wide Area Centrex, hereafter referred to as WAC processing unit and a call sending unit,
the call receiving unit is adapted to receive a call(201,301,401,501);
the WAC processing unit exchanges information with the call receiving unit, and is adapted to obtain an intra-WAC group short number of a called terminal and a calling subscriber number or a subscriber ID of a calling terminal from the call received by the call receiving unit, and retrieve a subscriber number of the called terminal according to the intra-WAC group short number of the called terminal, and retrieve an intra-WAC group short number of a calling terminal according to the calling subscriber number(303,402,503); and
the call sending unit exchanges information with the WAC processing unit, and is adapted to send a call request message carrying the intra-WAC group short number of the calling terminal, or the call sending unit is adapted to send a call request message carrying the intra-WAC group short number of the calling terminal and the subscriber ID of the called terminal; wherein the call request message comprises an extended SIP INVITE message or an extended H.323 Setup message (202,304,403,505).

14. The apparatus according to claim 13, wherein the WAC processing unit comprises a WAC information configuring unit and a WAC information query unit,
the WAC information configuring unit is adapted to configure a number mapping table associating subscriber numbers with intra-WAC group short numbers and WAC information; and
the WAC information query unit exchanges information with the WAC information configuring unit, and is adapted to query the number mapping table according to the intra-WAC group short number of the called terminal to obtain the subscriber number or ID of the called terminal, and retrieve the intra-WAC group short number of the calling terminal according to the calling subscriber number or ID.

15. The apparatus according to claim 13, wherein the WAC processing unit comprises a WAC information requesting unit and a WAC information obtaining unit,
the WAC information requesting unit is adapted to request the subscriber number or ID of the called terminal and the intra-WAC group short number of the calling terminal from an intelligent storage node; and
the WAC information obtaining unit is adapted to obtain the subscriber number or ID of the called terminal and the intra-WAC group short number of the calling terminal from a query result message returned by the intelligent storage node.

16. The apparatus according to claim 13, wherein the WAC processing unit comprises a called information requesting unit, a called information obtaining unit and a calling information obtaining unit,
the called information requesting unit is adapted to request the subscriber number or ID of the called terminal from an intelligent storage node;
the called information obtaining unit is adapted to obtain the subscriber number or ID of the called terminal from a query result message returned by the intelligent storage node; and
the calling information obtaining unit is adapted to obtain the intra-WAC group short number of the calling terminal from WAC information saved by the calling-side call controller locally.

17. The apparatus according to claim 13, 14, 15 or 16, wherein the apparatus for communication comprises a call controller or an application server.

18. A system for implementing WAC service, comprising a calling-side call controller according to any one of claims 13-16, and the system further comprising a called-side call controller;
the called-side call controller is adapted to connect the call to a called terminal and send the intra-WAC group short number of the calling terminal to the called terminal.

19. The system according to claim 18, wherein the system further comprises a calling-side application server adapted to, when triggered by the calling-side call controller, retrieve a subscriber ID of the called terminal using an intra-WAC group short number of the called terminal obtained from the call, retrieve the intra-WAC group short number of the calling terminal using a subscriber ID of the calling terminal obtained from the call, and return the subscriber ID of the called terminal and the intra-WAC group short number of the calling terminal to the calling-side call controller.

20. The system according to claim 18, wherein the system further comprises an intelligent storage node and a calling-side application server;
the intelligent storage node is adapted to store a number mapping table associating subscriber numbers with intra-WAC group short numbers and WAC information;
the calling-side application server is adapted to, when triggered by the calling-side call controller, query the number mapping table stored in the intelligent storage node using an intra-WAC group short number of the called terminal obtained from the call to obtain a subscriber ID of the called terminal, query the WAC information stored in the intelligent storage node using a subscriber ID of the calling terminal obtained from the call to obtain the intra-WAC group short number of the calling terminal, and return the subscriber ID of the called terminal and the intra-WAC group short number of the calling terminal to the calling-side call controller.

## Patentansprüche

1. Verfahren zum Implementieren eines Weitbereichs-Centrex-Dienstes, der im Folgenden WAC-Dienst genannt wird, das Folgendes umfasst:
Empfangen durch eine Anrufsteuereinheit der anrufenden Seite eines Anrufs von einem anrufenden Endgerät (201, 301, 401, 501);
Senden durch die Anrufsteuereinheit der anrufenden Seite einer Anrufanforderungsnachricht, die eine Intra-WAC-Gruppenkurznummer des anrufenden Endgeräts führt, zu einer Anrufsteuereinheit der angerufenen Seite im Verlauf des Anrufens der Anrufsteuereinheit der angerufenen Seite, wobei die Anrufanforderungsnachricht eine erweiterte SIP INVITE-Nachricht oder eine erweiterte H.323-Einrichtnachricht umfasst und wobei die Intra-WAC-Gruppenkurznummer des anrufenden Endgeräts im Verlauf des Anrufens des angerufenen Endgeräts durch die Anrufsteuereinheit (203, 306, 404, 507) der angerufenen Seite zu einem angerufenen Endgerät gesendet wird.

2. Verfahren nach Anspruch 1, wobei dann, wenn die Anrufsteuereinheit der anrufenden Seite einen Anruf von dem anrufenden Endgerät empfängt, die Anrufsteuereinheit der anrufenden Seite eine Intra-WAC-Gruppenkurznummer des angerufenen Endgeräts von dem anrufenden Endgerät empfängt.

3. Verfahren nach Anspruch 2, das ferner zwischen dem Prozess des Empfangens einer Intra-WAC-Gruppenkurznummer des angerufenen Endgeräts von dem anrufenden Endgerät durch die Anrufsteuereinheit der anrufenden Seite und dem Prozess des Sendens einer Intra-WAC-Gruppenkurznummer des anrufenden Endgeräts zu der Anrufsteuereinheit der angerufenen Seite durch die Anrufsteuereinheit der anrufenden Seite die folgenden Prozesse umfasst:
Wiedergewinnen durch die Anrufsteuereinheit der anrufenden Seite einer Teilnehmernummer des angerufenen Endgeräts in Übereinstimmung mit der Intra-WAC-Gruppenkurznummer des angerufenen Endgeräts und einer Nummernabbildungstabelle, die Teilnehmernummern zu Intra-WAC-Gruppenkurznummem zuordnet; Erhalten der Intra-WAC-Gruppenkurznummer des anrufenden Endgeräts aus WAC-Informationen, die im Voraus gesichert worden sind, wenn in Übereinstimmung mit dem Wiedergewinnungsergebnis bestimmt wird, dass das angerufene Endgerät ein Teilnehmer in einer WAC-Gruppe ist.

4. Verfahren nach Anspruch 2, das ferner zwischen dem Prozess des Empfangens einer Intra-WAC-Gruppenkurznummer des angerufenen Endgeräts von dem anrufenden Endgerät durch die Anrufsteuereinheit der anrufenden Seite und dem Prozess des Sendens einer Intra-WAC-Gruppenkurznummer des anrufenden Endgeräts zu der Anrufsteuereinheit der angerufenen Seite durch die Anrufsteuereinheit der anrufenden Seite die folgenden Prozesse umfasst:
Senden durch die Anrufsteuereinheit der anrufenden Seite einer Abfrageanforderungsnachricht zu einem intelligenten Speicherknoten in Übereinstimmung mit einer Teilnehmernummer des anrufenden Endgeräts und der Intra-WAC-Gruppenkurznummer des angerufenen Endgeräts; und
Wiedergewinnen durch den intelligenten Speicherknoten einer Teilnehmernummer des angerufenen Endgeräts entsprechend der Intra-WAC-Gruppenkurznummer des angerufenen Endgeräts und der Intra-WAC-Gruppenkurznummer des anrufenden Endgeräts, die der Teilnehmernummer des anrufenden Endgeräts entspricht, und Senden einer Abfrageanforderungsnachricht, die die Teilnehmernummer des angerufenen Endgeräts und die Intra-WAC-Gruppenkurznummer des anrufenden Endgeräts führt, zu der Anrufsteuereinheit der anrufenden Seite.

5. Verfahren nach Anspruch 2, das ferner zwischen dem Prozess des Empfangens einer Intra-WAC-Gruppenkurznummer des angerufenen Endgeräts von dem anrufenden Endgerät durch die Anrufsteuereinheit der anrufenden Seite und dem Prozess des Sendens einer Intra-WAC-Gruppenkurznummer des anrufenden Endgeräts zu der Anrufsteuereinheit der angerufenen Seite durch die Anrufsteuereinheit der anrufenden Seite die folgenden Prozesse umfasst:
Senden durch die Anrufsteuereinheit der anrufenden Seite einer Abfrageanforderungsnachricht zu einem intelligenten Speicherknoten in Übereinstimmung mit der Intra-WAC-Gruppenkurznummer des angerufenen Endgeräts;
Wiedergewinnen durch den intelligenten Speicherknoten einer Teilnehmernummer des angerufenen Endgeräts; und
Senden einer Abfrageergebnisnachricht, die die Teilnehmernummer des angerufenen Endgeräts führt, zu der Anrufsteuereinheit der anrufenden Seite, wenn in Übereinstimmung mit dem Wiedergewinnungsergebnis bestimmt wird, dass das angerufene Endgerät ein Teilnehmer in einer WAC-Gruppe ist; und
Erhalten durch die Anrufsteuereinheit der anrufenden Seite der Intra-WAC-Gruppenkurznummer des anrufenden Endgeräts aus WAC-Informationen, die im Voraus gesichert wurden.

6. Verfahren nach Anspruch 2, das ferner zwischen dem Prozess des Empfangens einer Intra-WAC-Gruppenkurznummer des angerufenen Endgeräts von dem anrufenden Endgerät durch die Anrufsteuereinheit der anrufenden Seite und dem Prozess des Sendens einer Intra-WAC-Gruppenkurznummer des anrufenden Endgeräts zu der Anrufsteuereinheit der angerufenen Seite durch die Anrufsteuereinheit der anrufenden Seite die folgenden Prozesse umfasst:
Auslösen durch die Anrufsteuereinheit der anrufenden Seite eines Anrufs zu einem Anwendungsserver der anrufenden Seite;
Wiedergewinnen durch den Anwendungsserver der anrufenden Seite einer Teilnehmer-ID des angerufenen Endgeräts in Übereinstimmung mit der Intra-WAC-Gruppenkurznummer des angerufenen Endgeräts und einer Nummernabbildungstabelle, die Teilnehmernummern zu Intra-WAC-Gruppenkurznummem zuordnet, und Erhalten der Intra-WAC-Gruppenkurznummer des anrufenden Endgeräts aus WAC-Informationen, die im Voraus gesichert wurden, wenn in Übereinstimmung mit dem Wiedergewinnungsergebnis bestimmt wird, dass das angerufene Endgerät ein Teilnehmer in einer WAC-Gruppe ist; und
Zurückleiten durch den Anwendungsserver der anrufenden Seite der Intra-WAC-Gruppenkurznummer des anrufenden Endgeräts und der Teilnehmer-ID des angerufenen Endgeräts zu der Anrufsteuereinheit der anrufenden Seite.

7. Verfahren nach Anspruch 2, das ferner zwischen dem Prozess des Empfangens einer Intra-WAC-Gruppenkurznummer des angerufenen Endgeräts von dem anrufenden Endgerät durch die Anrufsteuereinheit der anrufenden Seite und dem Prozess des Sendens einer Intra-WAC-Gruppenkurznummer des anrufenden Endgeräts zu der Anrufsteuereinheit der angerufenen Seite durch die Anrufsteuereinheit der anrufenden Seite die folgenden Prozesse umfasst:
Auslösen durch die Anrufsteuereinheit der anrufenden Seite eines Anrufs zu dem Anwendungsserver der anrufenden Seite;
Senden durch den Anwendungsserver der anrufenden Seite einer Abfrageanforderungsnachricht, die eine Teilnehmer-ID des anrufenden Endgeräts und die Intra-WAC-Gruppenkurznummer des angerufenen Endgeräts führt, zu einem intelligenten Speicherknoten;
Wiedergewinnen durch den intelligenten Speicherknoten der Intra-WAC-Gruppenkurznummer des anrufenden Endgeräts und einer Teilnehmer-ID des angerufenen Endgeräts in Übereinstimmung mit der Teilnehmer-ID des anrufenden Endgeräts und der Intra-WAC-Gruppenkurznummer des angerufenen Endgeräts, die in der Abfrageanforderungsnachricht geführt werden, und Senden einer Abfrageergebnisnachricht, die die wiedergewonnenen Informationen führt, zu dem Anwendungsserver der anrufenden Seite; und
Zurückleiten durch den Anwendungsserver der anrufenden Seite der Intra-WAC-Gruppenkurznummer des anrufenden Endgeräts und der Teilnehmer-ID des angerufenen Endgeräts zu der Anrufsteuereinheit der anrufenden Seite.

8. Verfahren nach Anspruch 2, das ferner zwischen dem Prozess des Empfangens einer Intra-WAC-Gruppenkurznummer des angerufenen Endgeräts von dem anrufenden Endgerät durch die Anrufsteuereinheit der anrufenden Seite und dem Prozess des Sendens einer Intra-WAC-Gruppenkurznummer des anrufenden Endgeräts zu der Anrufsteuereinheit der angerufenen Seite durch die Anrufsteuereinheit der anrufenden Seite die folgenden Prozesse umfasst:
Auslösen durch die Anrufsteuereinheit der anrufenden Seite eines Anrufs zu dem Anwendungsserver der anrufenden Seite;
Senden durch den Anwendungsserver der anrufenden Seite einer Abfrageanforderungsnachricht, die die Intra-WAC-Gruppenkurznummer des angerufenen Endgeräts führt, zu einem intelligenten Speicherknoten;
Wiedergewinnen durch den intelligenten Speicherknoten einer Teilnehmer-ID des angerufenen Endgeräts in Übereinstimmung mit der Intra-WAC-Gruppenkurznummer des angerufenen Endgeräts, die in der Abfrageanforderungsnachricht geführt wird, und Senden einer Abfrageergebnisnachricht, die die wiedergewonnenen Informationen führt, zu dem Anwendungsserver der anrufenden Seite;
Erhalten durch den Anwendungsserver der anrufenden Seite der Intra-WAC-Gruppenkurznummer des anrufenden Endgeräts aus WAC-Informationen, die im Voraus gesichert wurden; und
Zurückleiten durch den Anwendungsserver der anrufenden Seite der Intra-WAC-Gruppenkurznummer des anrufenden Endgeräts und der Teilnehmer-ID des angerufenen Endgeräts zu der Anrufsteuereinheit der anrufenden Seite.

9. Verfahren nach Anspruch 1, wobei die erweiterte INVITE-Nachricht eine INVITE-Nachricht ist, die die Intra-WAC-Gruppenkurznummer des anrufenden Endgeräts als einen Parameter eines Kopfsatzfeldes verwendet; oder
die erweiterte INVITE-Nachricht eine INVITE-Nachricht ist, die die Intra-WAC-Gruppenkurznummer des anrufenden Endgeräts als ein Kopfsatzfeld verwendet; oder die erweiterte INVITE-Nachricht eine INVITE-Nachricht ist, die die Intra-WAC-Gruppenkurznummer des anrufenden Endgeräts als einen Nachrichtenkörper verwendet.

10. Verfahren nach Anspruch 1, wobei die erweiterte Einrichtnachricht eine Einrichtnachricht ist, die die Intra-WAC-Gruppenkurznummer des anrufenden Endgeräts in einer Teilnehmerinformationseinheit H323-UU-PDU der Nachricht führt.

11. Verfahren nach Anspruch 1, das ferner Folgendes umfasst: Anzeigen durch das angerufene Endgerät der Intra-WAC-Gruppenkurznummer des anrufenden Endgeräts.

12. Verfahren nach Anspruch 1, das ferner Folgendes umfasst: Erhalten durch das angerufene Endgerät von Teilnehmerinformationen des anrufenden Endgeräts und Anzeigen der Teilnehmerinformationen.

13. Kommunikationsvorrichtung, die eine Anrufempfangseinheit, eine Weitbereichs-Centrex-Verarbeitungseinheit, die im Folgenden WAC-Verarbeitungseinheit genannt wird, und eine Anrufsendeeinheit umfasst,
wobei die Anrufempfangseinheit dafür ausgelegt ist, einen Anruf (201, 301, 401, 501) zu empfangen;
die WAC-Verarbeitungseinheit Informationen mit der Anrufempfangseinheit austauscht und dafür ausgelegt ist, eine Intra-WAC-Gruppenkurznummer eines angerufenen Endgeräts und eine Nummer eines anrufenden Teilnehmers oder eine Teilnehmer-ID eines anrufenden Endgeräts aus dem von der Anrufempfangseinheit empfangenen Anruf zu erhalten und eine Teilnehmernummer des angerufenen Endgeräts in Übereinstimmung mit der Intra-WAC-Gruppenkurznummer eines angerufenen Endgeräts wiederzugewinnen und eine Intra-WAC-Gruppenkurznummer eines anrufenden Endgeräts in Übereinstimmung mit der Nummer (303, 402, 503) des anrufenden Teilnehmers wiederzugewinnen; und
die Anrufsendeeinheit Informationen mit der WAC-Verarbeitungseinheit austauscht und dafür ausgelegt ist, eine Anrufanforderungsnachricht, die die Intra-WAC-Gruppenkurznummer des anrufenden Endgeräts führt, zu senden, oder die Anrufsendeeinheit dafür ausgelegt ist, eine Anrufanforderungsnachricht, die die Intra-WAC-Gruppenkurznummer des anrufenden Endgeräts und die Teilnehmer-ID des angerufenen Endgeräts führt, zu senden; wobei die Anrufanforderungsnachricht eine erweiterte SIP-INVITE-Nachricht oder eine erweiterte H.323-Einrichtnachricht (202, 304, 403, 505) umfasst.

14. Vorrichtung nach Anspruch 13, wobei die WAC-Verarbeitungseinheit eine WAC-Informationskonfigurationseinheit und eine WAC-Informationsabfrageeinheit umfasst,
wobei die WAC-Informationskonfigurationseinheit dafür ausgelegt ist, eine Nummernabbildungstabelle zu konfigurieren, die Teilnehmernummern zu Intra-WAC-Gruppenkurznummern und WAC-Informationen zuordnet; und
die WAC-Informationsabfrageeinheit Informationen mit der WAC-InformationsKonfigurationseinheit austauscht und dafür ausgelegt ist, die Nummernabbildungstabelle in Übereinstimmung mit der Intra-WAC-Gruppenkurznummer des angerufenen Endgeräts abzufragen, um die Teilnehmernummer oder die ID des angerufenen Endgeräts zu erhalten und um die Intra-WAC-Gruppenkurznummer des anrufenden Endgeräts in Übereinstimmung mit der Nummer oder der ID des anrufenden Teilnehmers wiederzugewinnen.

15. Vorrichtung nach Anspruch 13, wobei die WAC-Verarbeitungseinheit eine WAC-Informationsanforderungseinheit und eine WAC-Informationserhalteeinheit umfasst, wobei die WAC-Informations-Anforderungseinheit dafür ausgelegt ist, die Teilnehmernummer oder ID des angerufenen Endgeräts und die Intra-WAC-Gruppenkurznummer des anrufenden Endgeräts von einem intelligenten Speicherknoten anzufordern; und
die WAC-Informationserhalteeinheit dazu ausgelegt ist, die Teilnehmernummer oder ID des angerufenen Endgeräts und die Intra-WAC-Gruppenkurznummer des anrufenden Endgeräts aus einer Abfrageergebnisnachricht, die durch den intelligenten Speicherknoten zurückgeleitet wird, zu erhalten.

16. Vorrichtung nach Anspruch 13, wobei die WAC-Verarbeitungseinheit eine angerufene Informationsanforderungseinheit, eine angerufene Informationserhalteeinheit und eine anrufende Informationserhalteeinheit umfasst, wobei die angerufene Informationsanforderungseinheit dafür ausgelegt ist, die Teilnehmernummer oder ID des angerufenen Endgeräts von einem intelligenten Speicherknoten anzufordern;
wobei die angerufene Informationserhalteeinheit dafür ausgelegt ist, die Teilnehmernummer oder ID des angerufenen Endgeräts aus einer Abfrageergebnisnachricht, die durch den intelligenten Speicherknoten zurückgeleitet wird, zu erhalten; und
wobei die anrufende Informationserhalteeinheit dafür ausgelegt ist, die Intra-WAC-Gruppenkurznummer des anrufenden Endgeräts aus WAC-Informationen, die durch die Anrufsteuereinheit der anrufenden Seite lokal gesichert werden, zu erhalten.

17. Vorrichtung nach Anspruch 13, 14, 15 oder 16, wobei die Vorrichtung für die Kommunikation eine Anrufsteuereinheit oder einen Anwendungsserver umfasst.

18. System zum Implementieren eines WAC-Dienstes, das eine Anrufsteuereinheit der anrufenden Seite nach einem der Ansprüche 13-16 umfasst, wobei das System ferner eine Anrufsteuereinheit der angerufenen Seite umfasst;
wobei die Anrufsteuereinheit der angerufenen Seite dafür ausgelegt ist, den Anruf mit einem angerufenen Endgerät zu verbinden und die Intra-WAC-Gruppenkurznummer des anrufenden Endgeräts zu dem angerufenen Endgerät zu senden.

19. System nach Anspruch 18, wobei das System ferner einen Anwendungsserver der anrufenden Seite umfasst, der dafür ausgelegt ist, dann, wenn er durch die Anrufsteuereinheit der anrufenden Seite ausgelöst wird, eine Teilnehmer-ID des angerufenen Endgeräts unter Verwendung einer Intra-WAC-Gruppenkurznummer des angerufenen Endgeräts, die aus dem Anruf erhalten wird, wiederzugewinnen, die Intra-WAC-Gruppenkurznummer des anrufenden Endgeräts unter Verwendung einer Teilnehmer-ID des anrufenden Endgeräts, die aus dem Anruf erhalten wird, wiederzugewinnen und die Teilnehmer-ID des angerufenen Endgeräts und die Intra-WAC-Gruppenkurznummer des anrufenden Endgeräts zu der Anrufsteuereinheit der anrufenden Seite zurückzuleiten.

20. System nach Anspruch 18, wobei das System ferner einen intelligenten Speicherknoten und einen Anwendungsserver der anrufenden Seite umfasst;
wobei der intelligente Speicherknoten dafür ausgelegt ist, eine Nummernabbildungstabelle zu speichern, die Teilnehmernummern zu Intra-WAC-Gruppenkurznummem und WAC-Informationen zuordnet;
wobei der Anwendungsserver der anrufenden Seite dafür ausgelegt ist, dann, wenn er durch die Anrufsteuereinheit der anrufenden Seite ausgelöst wird, die Nummernabbildungstabelle, die in dem intelligenten Speicherknoten gespeichert ist, unter Verwendung einer Intra-WAC-Gruppenkurznummer des angerufenen Endgeräts, die aus dem Anruf erhalten wird, abzufragen, um eine Teilnehmer-ID des angerufenen Endgeräts zu erhalten, die WAC-Informationen, die in dem intelligenten Speicherknoten gespeichert sind, unter Verwendung einer Teilnehmer-ID des anrufenden Endgeräts, die aus dem Anruf erhalten wird, abzufragen, um die Intra-WAC-Gruppenkurznummer des anrufenden Endgeräts zu erhalten, und die Teilnehmer-ID des angerufenen Endgeräts und die Intra-WAC-Gruppenkurznummer des anrufenden Endgeräts zu der Anrufsteuereinheit der anrufenden Seite zurückzuleiten.

## Revendications

1. Procédé de mise en oeuvre d'un service de Centrex longue distance, appelé ci-après service WAC, comprenant :
la réception, par un contrôleur d'appel côté appelant, d'un appel provenant d'un terminal appelant (201, 301, 401, 501) ;
l'envoi, par le contrôleur d'appel côté appelant, à un contrôleur d'appel côté appelé, d'un message de requête d'appel comportant un numéro court de groupe intra-WAC du terminal appelant durant l'appel du contrôleur d'appel côté appelé, le message de requête d'appel comprenant un message SIP INVITE étendu ou un message d'Etablissement H.323 étendu, et dans lequel le numéro court de groupe intra-WAC du terminal appelant est envoyé à un terminal appelé durant l'appel du terminal appelé par le contrôleur d'appel côté appelé (203, 306, 404, 507).

2. Procédé selon la revendication 1, dans lequel, quand le contrôleur d'appel côté appelant reçoit un appel du terminal appelant, le contrôleur d'appel côté appelant reçoit un numéro court de groupe intra-WAC du terminal appelé depuis le terminal appelant.

3. Procédé selon la revendication 2, comprenant en outre les processus suivants entre le processus de réception par le contrôleur d'appel côté appelant d'un numéro court de groupe intra-WAC du terminal appelé depuis le terminal appelant et le processus d'envoi par le contrôleur d'appel côté appelant d'un numéro court de groupe intra-WAC du terminal appelant au contrôleur d'appel côté appelé :
le recouvrement, par le contrôleur d'appel côté appelant, d'un numéro d'abonné du terminal appelé en fonction du numéro court de groupe intra-WAC du terminal appelé et d'une table de mappage de numéros qui associe des numéros d'abonnés à des numéros courts de groupe intra-WAC ; l'obtention du numéro court de groupe intra-WAC du terminal appelant à partir d'informations WAC sauvegardées à l'avance, à la détermination en fonction du résultat du recouvrement que le terminal appelé est un abonné dans un groupe WAC.

4. Procédé selon la revendication 2, comprenant en outre les processus suivants entre le processus de réception par le contrôleur d'appel côté appelant d'un numéro court de groupe intra-WAC du terminal appelé depuis le terminal appelant et le processus d'envoi par le contrôleur d'appel côté appelant d'un numéro court de groupe intra-WAC du terminal appelant au contrôleur d'appel côté appelé :
l'envoi, par le contrôleur d'appel côté appelant à un noeud de mémorisation intelligent, d'un message de requête d'interrogation en fonction d'un numéro d'abonné du terminal appelant et du numéro court de groupe intra-WAC du terminal appelé ; et
le recouvrement, par le noeud de mémorisation intelligent, d'un numéro d'abonné du terminal appelé correspondant au numéro court de groupe intra-WAC du terminal appelé et au numéro court de groupe intra-WAC du terminal appelant correspondant au numéro d'abonné du terminal appelant, et l'envoi d'un message de résultat d'interrogation comportant le numéro d'abonné du terminal appelé et le numéro court de groupe intra-WAC du terminal appelant au contrôleur d'appel côté appelant.

5. Procédé selon la revendication 2, comprenant en outre les processus suivants entre le processus de réception par le contrôleur d'appel côté appelant d'un numéro court de groupe intra-WAC du terminal appelé depuis le terminal appelant et le processus d'envoi par le contrôleur d'appel côté appelant d'un numéro court de groupe intra-WAC du terminal appelant au contrôleur d'appel côté appelé :
l'envoi, par le contrôleur d'appel côté appelant à un noeud de mémorisation intelligent, d'un message de requête d'interrogation en fonction du numéro court de groupe intra-WAC du terminal appelé ;
le recouvrement, par le noeud de mémorisation intelligent, d'un numéro d'abonné du terminal appelé ; et l'envoi d'un message de résultat d'interrogation comportant le numéro d'abonné du terminal appelé au contrôleur d'appel côté appelant, à la détermination en fonction du résultat du recouvrement que le terminal appelé est un abonné dans un groupe WAC ; et
l'obtention, par le contrôleur d'appel côté appelant, du numéro court de groupe intra-WAC du terminal appelant à partir d'informations WAC sauvegardées à l'avance.

6. Procédé selon la revendication 2, comprenant en outre les processus suivants entre le processus de réception par le contrôleur d'appel côté appelant d'un numéro court de groupe intra-WAC du terminal appelé depuis le terminal appelant et le processus d'envoi par le contrôleur d'appel côté appelant d'un numéro court de groupe intra-WAC du terminal appelant au contrôleur d'appel côté appelé :
le déclenchement, par le contrôleur d'appel côté appelant, d'un appel vers un serveur d'application côté appelant ;
le recouvrement, par le serveur d'application côté appelant, d'un ID d'abonné du terminal appelé en fonction du numéro court de groupe intra-WAC du terminal appelé et d'une table de mappage de numéros qui associe des numéros d'abonnés à des numéros courts de groupe intra-WAC, et l'obtention du numéro court de groupe intra-WAC du terminal appelant à partir des informations WAC sauvegardées à l'avance, à la détermination en fonction du résultat du recouvrement que le terminal appelé est un abonné dans un groupe WAC ; et
le renvoi, par le serveur d'application côté appelant, du numéro court de groupe intra-WAC du terminal appelant et de l'ID d'abonné du terminal appelé au contrôleur d'appel côté appelant.

7. Procédé selon la revendication 2, comprenant en outre les processus suivants entre le processus de réception par le contrôleur d'appel côté appelant d'un numéro court de groupe intra-WAC du terminal appelé depuis le terminal appelant et le processus d'envoi par le contrôleur d'appel côté appelant d'un numéro court de groupe intra-WAC du terminal appelant au contrôleur d'appel côté appelé :
le déclenchement, par le contrôleur d'appel côté appelant, d'un appel vers le serveur d'application côté appelant ;
l'envoi, par le serveur d'application côté appelant à un noeud de mémorisation intelligent, d'un message de requête d'interrogation comportant un ID d'abonné du terminal appelant et le numéro court de groupe intra-WAC d'abonné du terminal appelé ;
le recouvrement, par le noeud de mémorisation intelligent, du numéro court de groupe intra-WAC du terminal appelant et d'un ID d'abonné du terminal appelé en fonction de l'ID d'abonné du terminal appelant et du numéro court de groupe intra-WAC du terminal appelé inclus dans le message de requête d'interrogation, et l'envoi d'un message de résultat d'interrogation comportant les informations recouvrées au serveur d'application côté appelant ; et
le renvoi, par le serveur d'application côté appelant, du numéro court de groupe intra-WAC du terminal appelant et de l'ID d'abonné du terminal appelé au contrôleur d'appel côté appelant.

8. Procédé selon la revendication 2, comprenant en outre les processus suivants entre le processus de réception par le contrôleur d'appel côté appelant d'un numéro court de groupe intra-WAC du terminal appelé depuis le terminal appelant et le processus d'envoi par le contrôleur d'appel côté appelant d'un numéro court de groupe intra-WAC du terminal appelant au contrôleur d'appel côté appelé :
le déclenchement, par le contrôleur d'appel côté appelant, d'un appel vers le serveur d'application côté appelant ;
l'envoi, par le serveur d'application côté appelant à un noeud de mémorisation intelligent, d'un message de requête d'interrogation comportant le numéro court de groupe intra-WAC du terminal appelé ;
le recouvrement, par le noeud de mémorisation intelligent, d'un ID d'abonné du terminal appelé en fonction du numéro court de groupe intra-WAC du terminal appelé dans le message de requête d'interrogation et l'envoi d'un message de résultat d'interrogation comportant les informations recouvrées au serveur d'application côté appelant ;
l'obtention, par le serveur d'application côté appelant, du numéro court de groupe intra-WAC du terminal appelant à partir d'informations WAC sauvegardées à l'avance ; et
le renvoi, par le serveur d'application côté appelant, du numéro court de groupe intra-WAC du terminal appelant et de l'ID d'abonné du terminal appelé au contrôleur d'appel côté appelant.

9. Procédé selon la revendication 1, dans lequel le message INVITE étendu est un message INVITE qui utilise le numéro court de groupe intra-WAC du terminal appelant comme paramètre d'un champ d'en-tête ; ou
le message INVITE étendu est un message INVITE qui utilise le numéro court de groupe intra-WAC du terminal appelant comme champ d'en-tête ; ou
le message INVITE étendu est un message INVITE qui utilise le numéro court de groupe intra-WAC du terminal appelant comme corps de message.

10. Procédé selon la revendication 1, dans lequel le message d'Etablissement étendu est un message d'Etablissement qui comporte le numéro court de groupe intra-WAC du terminal appelant dans une unité d'information d'abonné H323-UU-PDU du message.

11. Procédé selon la revendication 1, comprenant en outre : l'affichage, par le terminal appelé, du numéro court de groupe intra-WAC du terminal appelant.

12. Procédé selon la revendication 1, comprenant en outre : l'obtention, par le terminal appelé, d'informations d'abonné du terminal appelant, et l'affichage des informations d'abonné.

13. Appareil de communication, comprenant une unité de réception d'appel, un Centrex longue distance, appelé ci-après unité de traitement WAC, et une unité d'envoi d'appel,
l'unité de réception d'appel est adaptée pour recevoir un appel (201, 301, 401, 501) ; l'unité de traitement WAC échange des informations avec l'unité de réception d'appel, et est adaptée pour obtenir un numéro court de groupe intra-WAC du terminal appelé et un numéro d'abonné appelant ou un ID d'abonné d'un terminal appelant à partir de l'appel reçu par l'unité de réception d'appel, et recouvrer un numéro d'abonné du terminal appelé en fonction du numéro court de groupe intra-WAC du terminal appelé, et recouvrer un numéro court de groupe intra-WAC d'un terminal appelant en fonction du numéro d'abonné appelant (303, 402, 503) ; et
l'unité d'envoi d'appel échange des informations avec l'unité de traitement WAC, et est adaptée pour envoyer un message de requête d'appel comportant le numéro court de groupe intra-WAC du terminal appelant, ou l'unité d'envoi d'appel est adaptée pour envoyer un message de requête d'appel comprenant le numéro court de groupe intra-WAC du terminal appelant et l'ID d'abonné du terminal appelé ; le message de requête d'appel comprenant un message SIP INVITE étendu ou un message d'Etablissement H.323 étendu (202, 304, 403, 505).

14. Appareil selon la revendication 13, dans lequel l'unité de traitement WAC comprend une unité de configuration d'informations WAC et une unité d'interrogation d'informations WAC,
l'unité de configuration d'informations WAC est adaptée pour configurer une table de mappage de numéros qui associe des numéros d'abonnés à des numéros courts de groupe intra-WAC et à des informations WAC ; et
l'unité d'interrogation d'informations WAC échange des informations avec l'unité de configuration d'informations WAC, et est adaptée pour interroger la table de mappage de numéros en fonction du numéro court de groupe intra-WAC du terminal appelé afin d'obtenir le numéro d'abonné ou l'ID du terminal appelé, et recouvrer le numéro court de groupe intra-WAC du terminal appelant en fonction du numéro ou de l'ID de l'abonné appelant.

15. Appareil selon la revendication 13, dans lequel l'unité de traitement WAC comprend une unité de requête d'informations WAC et une unité d'obtention d'informations WAC,
l'unité de requête d'informations WAC est adaptée pour requérir le numéro d'abonné ou l'ID du terminal appelé et le numéro court de groupe intra-WAC du terminal appelant auprès d'un noeud de mémorisation intelligent ; et
l'unité d'obtention d'informations WAC est adaptée pour obtenir le numéro d'abonné ou l'ID du terminal appelé et le numéro court de groupe intra-WAC du terminal appelant à partir d'un message de résultat d'interrogation renvoyé par le noeud de mémorisation intelligent.

16. Appareil selon la revendication 13, dans lequel l'unité de traitement WAC comprend une unité de requête d'informations d'appelé, une unité d'obtention d'informations d'appelé et une unité d'obtention d'informations d'appelant,
l'unité de requête d'informations d'appelé est adaptée pour requérir le numéro d'abonné ou l'ID du terminal appelé auprès d'un noeud de mémorisation intelligent ; l'unité d'obtention d'informations d'appelé est adaptée pour obtenir le numéro d'abonné ou l'ID du terminal appelé à partir d'un message de résultat d'interrogation renvoyé par le noeud de mémorisation intelligent ; et
l'unité d'obtention d'informations d'appelant est adaptée pour obtenir le numéro court de groupe intra-WAC du terminal appelant à partir des informations WAC sauvegardées localement par le contrôleur d'appel côté appelant.

17. Appareil selon la revendication 13, 14, 15 ou 16, l'appareil de communication comprenant un contrôleur d'appel ou un serveur d'application.

18. Système de mise en oeuvre d'un service WAC, comprenant un contrôleur d'appel côté appelant selon l'une quelconque des revendications 13 à 16, et le système comprenant en outre un contrôleur d'appel côté appelé ;
le contrôleur d'appel côté appelé est adapté pour connecter l'appel à un terminal appelé et envoyer le numéro court de groupe intra-WAC du terminal appelant au terminal appelé.

19. Système selon la revendication 18, le système comprenant en outre un serveur d'application côté appelant adapté pour, lorsqu'il est déclenché par le contrôleur d'appel côté appelant, recouvrer un ID d'abonné du terminal appelé en utilisant un numéro court de groupe intra-WAC du terminal appelé obtenu à partir de l'appel, recouvrer le numéro court de groupe intra-WAC du terminal appelant en utilisant un ID d'abonné du terminal appelant obtenu à partir de l'appel, et renvoyer l'ID d'abonné du terminal appelé et le numéro court de groupe intra-WAC du terminal appelant au contrôleur d'appel côté appelant.

20. Système selon la revendication 18, le système comprenant en outre un noeud de mémorisation intelligent et un serveur d'application côté appelant ;
le noeud de mémorisation intelligent étant adapté pour mémoriser une table de mappage de numéros qui associe des numéros d'abonné à des numéros courts de groupe intra-WAC et à des informations WAC ;
le serveur d'application côté appelant étant adapté pour, lorsqu'il est déclenché par le contrôleur d'appel côté appelant, interroger la table de mappage de numéros mémorisée dans le noeud de mémorisation intelligent en utilisant un numéro court de groupe intra-WAC du terminal appelé obtenu à partir de l'appel afin d'obtenir un ID d'abonné du terminal appelé, interroger les informations WAC mémorisées dans le noeud de mémorisation intelligent en utilisant un ID d'abonné du terminal appelant obtenu à partir de l'appel afin d'obtenir le numéro court de groupe intra-WAC du terminal appelant, et renvoyer l'ID d'abonné du terminal appelé et le numéro court de groupe intra-WAC du terminal appelant au contrôleur d'appel côté appelant.
